(19) Europäisches Patentamt
European Patent Office
Office européen des brevets

(11) **EP 4 443 733 A1**

(12) **EUROPEAN PATENT APPLICATION**
published in accordance with Art. 153(4) EPC

(43) Date of publication:
**09.10.2024 Bulletin 2024/41**

(21) Application number: **22898612.1**

(22) Date of filing: **24.11.2022**

(51) International Patent Classification (IPC):
***H02M 7/48*** (2007.01)

(52) Cooperative Patent Classification (CPC):
**H02M 7/48; Y02B 70/10**

(86) International application number:
**PCT/JP2022/043346**

(87) International publication number:
**WO 2023/095830 (01.06.2023 Gazette 2023/22)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.11.2021  JP 2021193360
07.01.2022  JP 2022001472**

(71) Applicant: **Imasen Electric Industrial Co., Ltd.
Inuyama-shi, Aichi 484-8507 (JP)**

(72) Inventor: **YAMANOUE, Koichi
Inuyama-shi, Aichi 484-8507 (JP)**

(74) Representative: **Grünecker Patent- und
Rechtsanwälte
PartG mbB
Leopoldstraße 4
80802 München (DE)**

(54) **SWITCHING CIRCUIT AND INVERTER CIRCUIT**

(57) [Subject Matter]
To provide a switching circuit with high power conversion efficiency at high frequencies.
[Solution(s)]
The switching circuit 110 consists of an inductor L arranged between the load means R and the switch means M, a first rectifying means D1 and a first capacitor C1 arranged in series between the switch means M and the power supply or ground, a second rectifying means D2 and a second capacitor C2 connected in parallel to the first rectifying means and the first capacitor C1 arranged in series through the inductor L, and the third rectifying means D3 arranged between the connection of the first rectifying means D1 and the first capacitor C1 and the connection of the second capacitor C2 and the second rectifying means D2.

Fig.1

**Description**

TECHNICAL FIELD

The present invention relates to switching circuits and inverter circuits that perform ZCS/ZVS operation in a non-resonant manner.

BACKGROUND ART

To improve the cruising range of electric vehicles and fuel efficiency of hybrid vehicles, high power conversion efficiency is required for the inverter installed in the vehicle. In addition, to improve motor efficiency, it is necessary to raise the carrier frequency, which is the operating frequency of the inverter, to a higher frequency. At the same time, it is desirable to improve EMC performance by reducing the electromagnetic noise generated, and to reduce the cost of noise countermeasures.

     Patent document 1 discloses an inverter circuit that performs ZCS operation
     Patent document 2 discloses an inverter circuit that uses a Phillip flop.

Fig. 27 shows the output circuit of a 3-phase inverter for one phase, with an inductive load connected to the high-side, a power source voltage of 48 V, a drive frequency of 50 KHz, a duty cycle of 50%, and a specified dead time to prevent throughput.

The load is on the high side, and the current direction is to flow into the half bridge. Therefore, the MOSFET on the bottom switch 160 side becomes the main switch, and the top switch 150 side operates the flywheel circuit.

Fig. 28 shows the simulation results of the voltage, current, and loss of the top switch and the bottom switch when the bottom switch is on.

(Conditions)

     Bottom on operation analysis
     Power source voltage 48V
     Load inductance 10uH
     Load resistance 0.15 $\Omega$ (48V 0.15$\Omega$=320A, equivalent to 160A since 50% duty cycle is used)
     Gate resistance 2.2 $\Omega$
     Fixed constant circuit (wiring inductance = 0)

Just before the bottom switch 160 turns on, the load current ≈160A due to the load inductance flows toward the power source via the top switch 150. Since the bottom switch 160 turns on at this time, a large recovery current flows through the top and bottom switches during the time ≈6ns when the hot carrier due to the forward current of the body diode and external Schottky diode of the top switch 150 disappears.

The top switch side has a small loss due to the small S-D voltage, while a large power loss occurs on the bottom switch side. After the carrier extinction, the D-S voltage of the top and bottom MOSFETs increases (decreases) exponentially while charging the D-S capacitance of the top switch side MOSFET, and this voltage becomes the output pin voltage waveform.

The above recovery current flows as a large harmonic ripple in the power source current.

PRIOR ART PUBLICATION

PATENT PUBLICATION

     Patent Publication (1): Japanese Laid-Open Patent Publication No. 2014-220913
     Patent Publication (2): Japanese Laid-Open Patent Publication No. 2015-76989

SUMMARY OF THE INVENTION

PROBLEM(S) TO BE SOLVED BY THE INVENTION

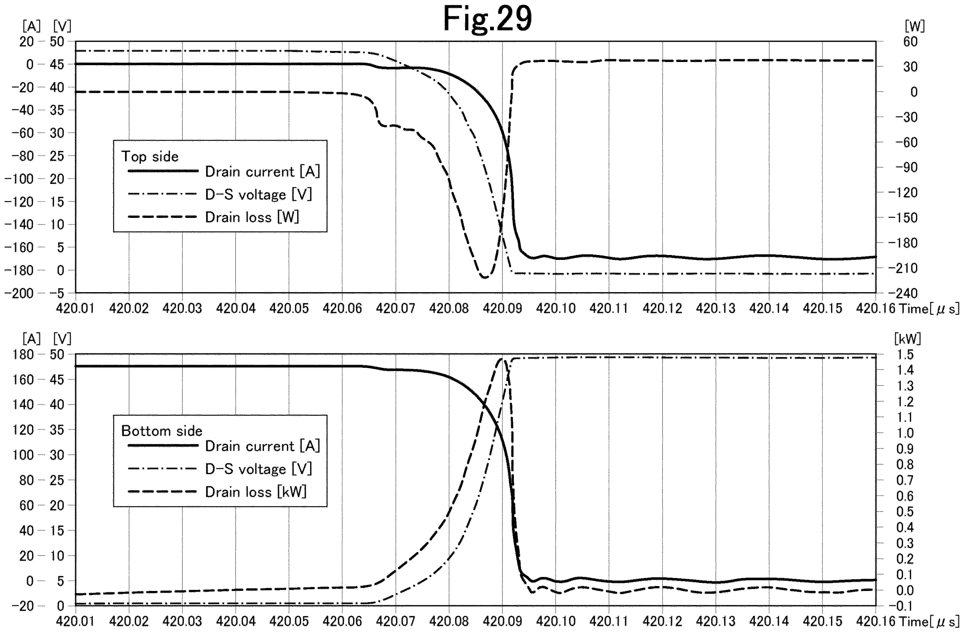

Fig. 29 shows the simulated voltage, current, and loss of the top switch and the bottom switch when the bottom switch is turned off.

Just before the bottom switch 160 turns off, the load current ≈160A due to load inductance flows through the bottom switch 160 in the direction of GND.

Since the bottom switch 160 turns off at this time, the load current remains with the current value held by the inductive component, and the current decrease of the bottom switch 160 increases as the current of the top switch 150.

The relationship between the S-D voltage, drain current, and loss of the top and bottom switches is shown below. As shown above, the top switch is initially off, so the increase in current relative to the increase in voltage is delayed, resulting in relatively low loss, while the bottom switch generates large loss as the voltage between S-D increases while maintaining the load current of 160A.

The losses due to each of the above switching operations and the power conversion efficiency are as follows.

     Bottom switch side MOSFET loss (for one MOSFET) 11.872W
     Bottom side recovery reduction Schottky diode loss = 266uW
     Top switch side MOSFET loss (for one MOSFET) 4.122W
     Top side recovery reduced Schottky diode loss = 373.8mW
     Load power = 3.6757KW
     Power source power = 3.7235KW

Efficiency = 98.71

A common method to reduce switching losses and improve efficiency is to use resonance (partial resonance) to perform ZVS and ZCS operations and to reduce V × I losses by creating a difference between the voltage and current phases of the switch elements. However, this method has drawbacks such as a complicated structure and difficult timing control. Furthermore, in conventional ZCS and ZVS inverter circuits, the energy used for ZCS and ZVS operation is consumed as it is, so the efficiency cannot be increased.

The object of the present invention is to provide switching circuits and inverter circuits with high frequency, high power conversion efficiency, and improved EMC performance with low electromagnetic noise generated.

SOLUTION(S) TO THE PROBLEM(S)

The present invention is a switching circuit (110) that drives load means (R) by interrupting the electric power supplied from a power source (E), and that reduces switching losses by setting a time difference between the voltage applied to the switching means (M) built into the switching circuit and the current flowing through the switching means (M). The switching circuit contains an inductor (L) located between the load means (R) and the switching means (M); a first rectifier means (D1) and a first capacitor (C1) arranged in series between the switching means (M) and the power source or ground; a second rectifier means (D2) and a second capacitor (C2) connected in parallel to the first rectifier means (D1) and the first capacitor (C1) arranged in series through the inductor; and a third rectifier means (D3) arranged between a connection of the first rectifier means (D1) and the first capacitor (C1) and a connection of the second capacitor (C2) and the second rectifier means (D2).

The present invention is an inverter circuit containing: a half-bridge inverter having a top inverter switch (50) and a bottom inverter switch (60); a top side auxiliary circuit (20T) performing ZVS/ZCS operation when the top inverter switch (50) is turned on and off; and a bottom side auxiliary circuit (20B) performing ZVS/ZCS operation when the bottom inverter switch (60) is turned on or off. The inverter circuit further contains a top side inductor (L3) connected between the top inverter switch (50) and the load means (LU), which performs ZCS operation during the on transition of the top inverter switch (50) and the bottom inverter switch (60), and a bottom side inductor (L4) connected between the bottom inverter switch (60) and the load means (L1) and connected to the top side inductor (L3). The top side auxiliary circuit (20T) contains: a first rectifier means (D1) and a first capacitor (C1) arranged in series between the top inverter switch (50) and a power source or ground; a second rectifier means (D2) and a second capacitor (C2) connected in parallel to the first rectifier means (D1) and the first capacitor (C1) in series via the top side inductor (L3); and a third rectifier means (D3) arranged between a connection of the first rectifier means (D1) and the first capacitor (C1) and a connection of the second capacitor (C2) and the second rectifier means (D2).

The numerical references in each of the above brackets indicate the correspondence with the specific means described in the embodiments described below.

EFFECT(S) OF THE INVENTION

The switching circuit in Claim 1, the energy of the inductor (L) used to turn on the switch means (M) at ZCS is stored in the first capacitor (C 1) while the switch means (M) is on. The energy (voltage) of the first capacitor (C1) is then used to turn off the switch means (M) at ZVS, and the energy of the first capacitor (C 1) is returned to the power source side while the switch means (M) is off, causing the first capacitor (C1) to discharge completely. In the conventional inverter circuit of ZCS and ZVS, the energy used for ZCS and ZVS operation is consumed as it is, whereas the inverter circuit of claim 1 returns the energy used for ZCS and ZVS operation to the power source side, thus achieving high efficiency.

The switching circuit in claim 2, the first rectifier means (D1) prevents the charge of the first capacitor (C1) from short-circuiting to the switching means (M), and the third rectifier means (D3) can prevent the inductor (L) from short-circuiting.

The switching circuit in claim 3, in which the second rectifier means (D2) can return the charge of the second capacitor (C2) to the power source (E).

The switching circuit in claim 4, in which the load means is a resistive load (R) and the switching means contains a switching element (M) of a one-sided switch that is driven in one-sided switching mode only. The structure is simple because the two-sided switching mode is not used.

The switching circuit in claim 5, in which the load means is an inductive load (L1) and has a rectifier element (DF) to carry flywheel current. The inverter circuit of claim 5 has a simple control configuration because the flywheel current is passed through the rectifier element (DF).

The switching circuit in claim 6, in which the inductor is divided into two parts (L3, L4), one end (OUT) of the inductive load (L1) is connected to the divided connection point, the other end (VB) of the inductive load (L1) is connected to the power source or ground, and one end (anode) of the rectifier element (DF) is connected to the inductor (L3, L4) divided into two parts. The other end (cathode) of the rectifier element (DF) is connected to the power source or ground. In the inverter circuit of claim 6, the control configuration is simple because the flywheel current is applied to the rectifier element (DF).

The switching circuit in claim 7, in which the load means is an inductive load (L1) and furthermore has a switching element (M1) for passing the flywheel current. The inverter circuit of claim 7 has a lower loss than using a rectifier element because the flywheel current is passed through the switching element (M1).

The switching circuit in claim 8, in which the inductor is divided into two parts (L3, L4), one end (OUT) of the inductive load (L1) is connected to the divided connection point, the other end (VB) of the inductive load is connected to the power source or ground, and the two divided inductors (L3, L4) are connected in series to one of the switching devices (M1). The other end (source or drain) of the switching element (M1) is connected to the power source or ground. In the inverter circuit of claim 8, the flywheel current is passed through the switching element (M1), resulting in lower loss than using a rectifier element.

The inverter circuit in claim 9, in which the switch recovery current (energy) that flows to the inverter switch on the opposite side of the flywheel switch during the main switch-on transition is stored in the top side inductor (L3) and bottom side inductor (L4) and is regenerated to the power source during the next switch-off operation. This improves the power conversion efficiency. In addition, by storing the switch recovery current in the top side inductor (L3) and bottom side inductor (L4), low noise can be achieved.

The inverter circuit in claim 9, in which the energy of the load means (LU) used to turn on the top switch (50) and the bottom switch (60) with ZCS is stored in the first capacitor (C1) while the top switch and the bottom switch are on. The energy (voltage) of the first capacitor (C1) is then used to turn off the top and bottom switches with ZVS, and the energy of the first capacitor (C1) is returned to the power source side while the top and bottom switches are off, causing the first capacitor (C1) to discharge completely. In the conventional inverter circuit of ZCS and ZVS, the energy used for ZCS and ZVS operation is consumed as it is, whereas in the inverter circuit of claim 9, the energy used for ZCS and ZVS operation is returned to the power source side, thus achieving high efficiency.

The inverter circuit of claim 10 is a 3-phase inverter, which can drive a 3-phase motor at high frequency with low loss.

The inverter circuit of claim 11, in which the bottom-side auxiliary circuit (20B) contains a first rectifier means (D 1) and a first capacitor (C 1) arranged in series between the bottom inverter switch (60) and the power source or ground; a second rectifier means (D2) and a second capacitor (C2) connected in parallel to the first rectifier means (D 1) and the first capacitor (C 1) in series via the bottom side inductor (L4); and a third rectifier means (D3) arranged between a connection of the first rectifier means (D 1) and the first capacitor (C 1) and a connection of the second capacitor (C2) and the second rectifier means (D 1). The inverter circuit of claim 11 can improve the power conversion efficiency because the switch recovery current (energy) flowing in the inverter switch is accumulated in the top side inductor (L3) and the bottom side inductor (L4) and regenerated to the power source in the next switch-off operation.

The inverter circuit of claim 12, in which, further containing: a detection means (70) for detecting which of the top inverter switch (50) or the bottom inverter switch (60) is the main switch; and an auxiliary circuit shutoff means (SW1, SW2) for enabling operation of the top side auxiliary circuit (20T) or the bottom side auxiliary circuit (20B) on the main switch side and disabling operation of the top side auxiliary circuit (20T) or the bottom side auxiliary circuit (20B) on the non-main switch side. The inverter circuit of claim 12, while using both side switching modes of top and bottom inverter switches, properly accumulates the switch recovery current (energy) flowing to the inverter switch in the top side inductor (L3) and bottom side inductor (L4), and then the power conversion efficiency can be improved because the energy is regenerated to the power source in the next operation at switch-off.

The inverter circuit of claim 13, further containing: a flip-flop (A3) having an input terminal (D, CLK) that constitutes the detection means and an output terminal (Γa, Q bar) that controls the auxiliary circuit shutoff means. Thus, the inverter circuit of claim 13 detects the main switch by determining whether the current load is flowing out or in from the inverter circuit, enabling the top-side auxiliary circuit (20T) or bottom-side auxiliary circuit (20B) on the main switch side to operate, and the top-side auxiliary circuit (20T) or the bottom side auxiliary circuit (20B) on the non-main switch side can be disabled.

The inverter circuit of claim 14, in which the detection means (70) contains a resistor (R22) connected between the connection (CN) of the top side inductor (L3) and the bottom side inductor (L4) and the load (LU), a first comparator (CPT) connected to both ends of the resistor that generates an output when the potential of the load side is lower than the potential of the connection side, and a second comparator (CPB) that generates an output when the potential of the load side is higher than the potential of the connection side. The auxiliary circuit shutoff means contains a first switch (SW1) and a second switch (SW2) that enables the top-side auxiliary circuit (20T) or bottom-side auxiliary circuit (20B) on the main switch side to operate and disables the top-side auxiliary circuit or bottom-side auxiliary circuit on the non-main switch side by the output of the first comparator and second comparator. The inverter circuit of claim 14 detects the main switch by determining whether the current load is flowing out or in from the inverter circuit and enables the top-side auxiliary circuit (20T) or bottom-side auxiliary circuit (20B) on the main switch side to operate, and disables the top-side auxiliary circuit (20T) or bottom-side auxiliary circuit (20B) on the non-main switch side can be made inoperable. The inverter circuit of claim 14 has a simple configuration because the detection means (70) consists of a resistor (R22), a first comparator (CPT) and a second comparator (CPB).

The inverter circuit of claim 15 contains comparator means (CPU2, CPV2, CPW2) for comparing the U-phase control input signal, the V-phase control input signal, and the W-phase control input signal, and auxiliary circuit shutoff means (SW1, SW2) for enabling the top-side auxiliary circuit (20T) or bottom-side auxiliary circuit (20B) on the main switch side to operate and disabling the top-side auxiliary circuit or bottom-side auxiliary circuit on the non-main switch side. The inverter circuit of claim 15 detects the main switch from the U-phase control input signal, V-phase control input signal, and W-phase control input signal to enable operation of the top-side auxiliary circuit (20T) or bottom-side auxiliary circuit (20B) on the main switch side and disable operation of the top-side auxiliary circuit (20T) or bottom-side auxiliary circuit (20B) on the non-main switch side. The inverter circuit of claim 15 can interrupt the auxiliary circuit without passing load current through a resistor, thus eliminating resistance loss and increasing efficiency.

The inverter circuit of claim 16, in which the comparator means (80) contains a comparator (CPU2) for U-phase control that compares the W-phase control input signal and the U-phase control input signal, a comparator (CPV2) for V-phase control that compares the U-phase control input signal and the V-phase control input signal, and a comparator (CPV2) for W-phase control that compares the V-phase control input signal and the W-phase control input signal. The comparator (CPW2) for W-phase control compares the V-phase control input signal and the W-phase control input signal. Auxiliary circuit shutoff means contains: an auxiliary circuit shutoff means (SW1U, SW2U) for U-phase, which enables operation of the top side auxiliary circuit (20T) or the bottom side auxiliary circuit (20B) on the main switch side of U-phase (110U) and disables operation of the top side auxiliary circuit or the bottom side auxiliary circuit on the non-main switch side, based on the output of the comparator for U-phase control; an auxiliary circuit shutoff means (SW1V, SW2V) for V-phase, which enables operation of the top side auxiliary circuit (20T) or the bottom side auxiliary circuit (20B) on the main switch side of Vphase (110V) and disables operation of the top side auxiliary circuit or the bottom side auxiliary circuit on the non-main switch side, based on the output of the comparator for V-phase control; and an auxiliary circuit shutoff means (SW1W, SW2W) of W-phase, which enables operation of the top side auxiliary circuit (20T) or the bottom side auxiliary circuit (20B) on the main switch side of W-phase (110W) and disables operation of the top side auxiliary circuit or the bottom side auxiliary circuit on the non-main switch side, based on the output of the comparator for controlling W-phase. The inverter circuit of claim 16 detects the main switch from the U-phase control input signal, V phase control input signal, and W-phase control input signal to enable operation of the top-side auxiliary circuit (20T) or bottom-side auxiliary circuit (20B) on the main switch side and disable operation of the top-side auxiliary circuit (20T) or bottom-side auxiliary circuit (20B) on the non-main switch side. The inverter circuit of claim 16 can interrupt the auxiliary circuit without passing load current through a resistor, thus eliminating resistance loss and increasing efficiency.

The inverter circuit of claim 18, in which the top side inductor (L3) connected to the top inverter switch (122) and the bottom side inductor (L4) connected to the bottom inverter switch (118) are part of a metal plate containing an output terminal (124) and containing a pair of extending pieces (124A, 124B) formed so that their extending directions are orthogonal. The inverter circuit of claim 18, in which the top side inductor L3 and the bottom side inductor L4 are part of the metal plate constituting the output terminal 124, can be configured at a low cost, and has high mechanical strength and high reliability. Although magnetic flux is generated in both extending pieces 124A and 124B in a spiral shape with respect to the direction of extension, the fluxes do not interfere with each other because the directions of extension are formed in an orthogonal manner.

The inverter circuit of claim 19, in which the extending pieces (124A, 124B) are of constant width and extend from both ends (124L, 124R) of the metal plate containing the output terminal (124). The inverter circuit of claim 19, in which the top side inductors L3 and bottom side inductors L4 are part of the metal plate containing the output terminal 124, and thus can be configured inexpensively, and has high mechanical strength and high reliability.

The inverter circuit of claim 20, containing a half-bridge inverter having a top inverter switch (50, 122) and a bottom inverter switch (60, 118), a top side inductor (L3) connected to the top inverter switch (50), and a bottom side inductor (L4) connected to the bottom inverter switch (60). The top side inductor (L3) connected to the top inverter switch (122) and the bottom side inductor (L4) connected to the bottom inverter switch (118) are part of a metal plate containing the output terminal (124), and containing a pair of extending pieces (124A, 124B) formed so that their extending directions are orthogonal. The inverter circuit of claim 20, in which the top side inductor L3 and the bottom side inductor L4 are part of the metal plate constituting the output terminal 124, can be configured at a low cost, and has high mechanical strength and high reliability. Both extending pieces 124A and 124B generate magnetic flux in a spiral shape with respect to the direction of extension, but because the directions of extension are formed in an orthogonal manner, the magnetic fluxes do not interfere with each other.

The inverter circuit of claim 21, in which the extending pieces (124A, 124B) are of constant width and extend from both ends (124L, 124R) of the metal plate containing the output terminal (124). The inverter circuit of claim 21, in which the top side inductor L3 and the bottom side inductor L4 are part of the metal plate constituting the output terminal 124, and thus can be configured inexpensively, and has high mechanical strength and high reliability.

BRIEF DESCRIPTION OF THE DRAWINGS

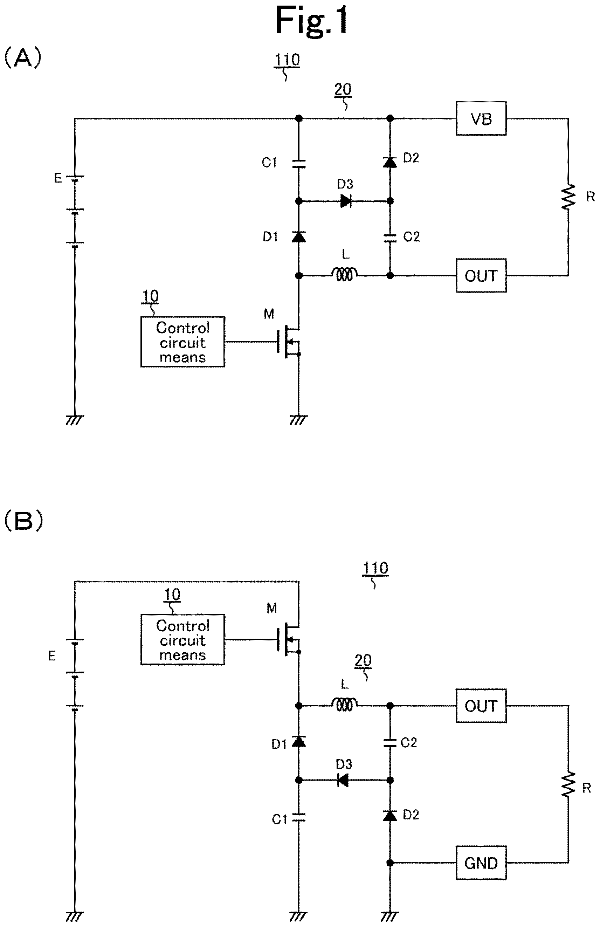

[Fig. 1] Fig. 1(A) is a circuit example of a switching circuit according to the first embodiment of the invention in which the source side of MOFFET(M) is grounded, and Fig. 1 (B) is a circuit example of a switching circuit according to the first embodiment in which a resistive load R is connected to the source side of MOFFET(M);

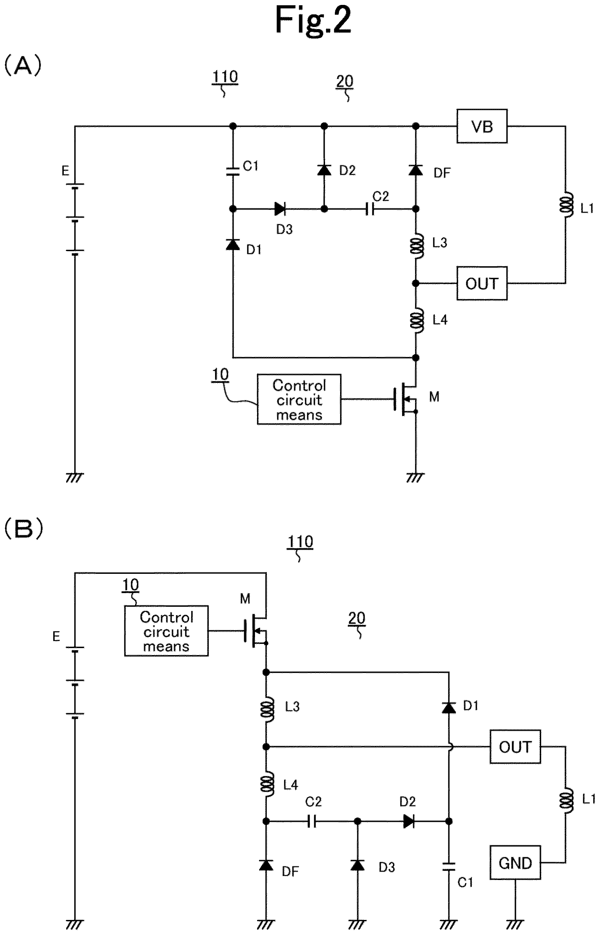

[Fig. 2] Fig. 2(A) is a circuit example of a switching circuit according to the second embodiment in which the source side of MOFFET(M) is grounded, and Fig. 2(B) is a circuit example of a switching circuit according to the second embodiment in which an inductive load L1 is connected to the source side of MOFFET(M);

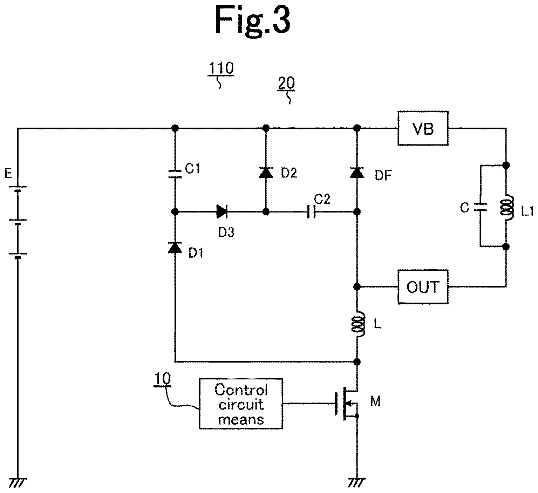

[Fig. 3] a circuit example of a switching circuit according to the second embodiment, which is configured with a single inductor;

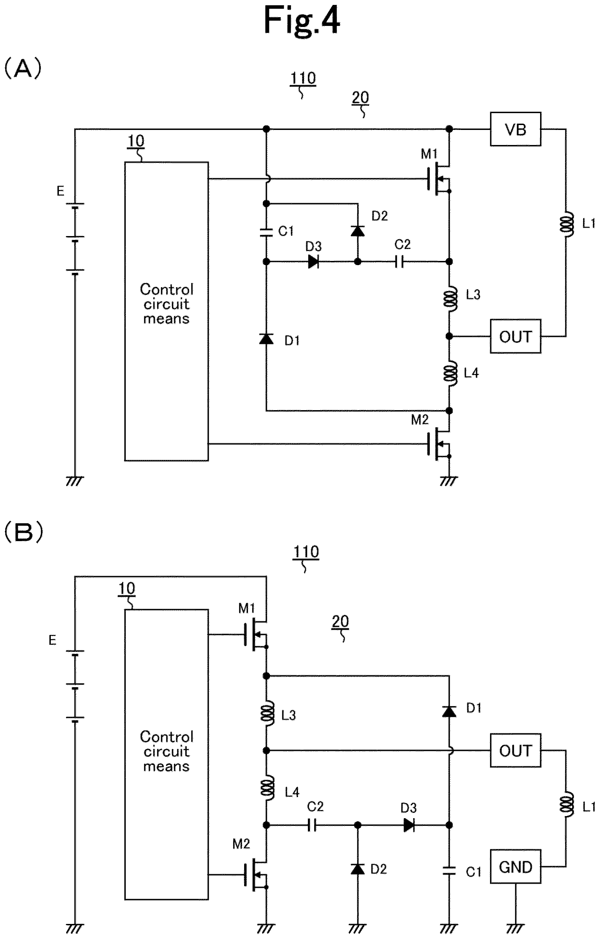

[Fig. 4] Fig. 4(A) shows the circuit configuration of the switching circuit of the third embodiment in which the MOSFET (M1) side operates as a flywheel circuit and the MOSFET (M2) acts as the main switch. Fig. 4(B) shows the circuit configuration of the switching circuit of the third embodiment in which the MOSFET (M2) side operates as a flywheel circuit and MOSFET (M1) acts as the main switch;

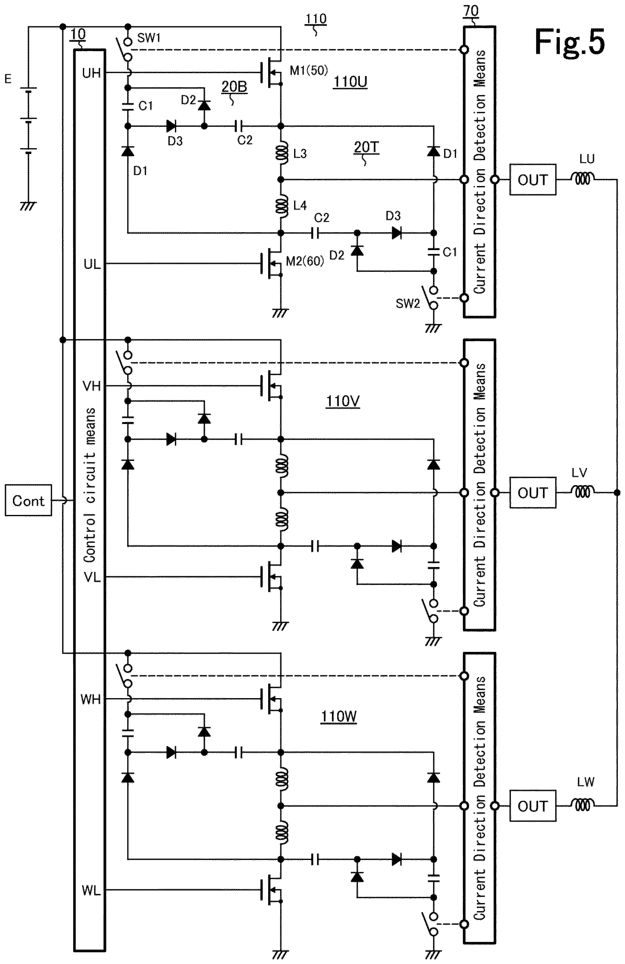

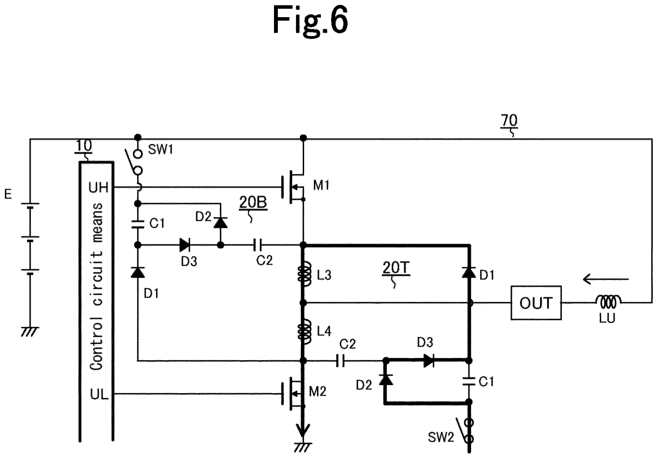

[Fig. 5] circuit diagram of the inverter circuit of the fourth embodiment [Fig. 6] lustration of the current flowing through the inverter circuit of the fourth embodiment;

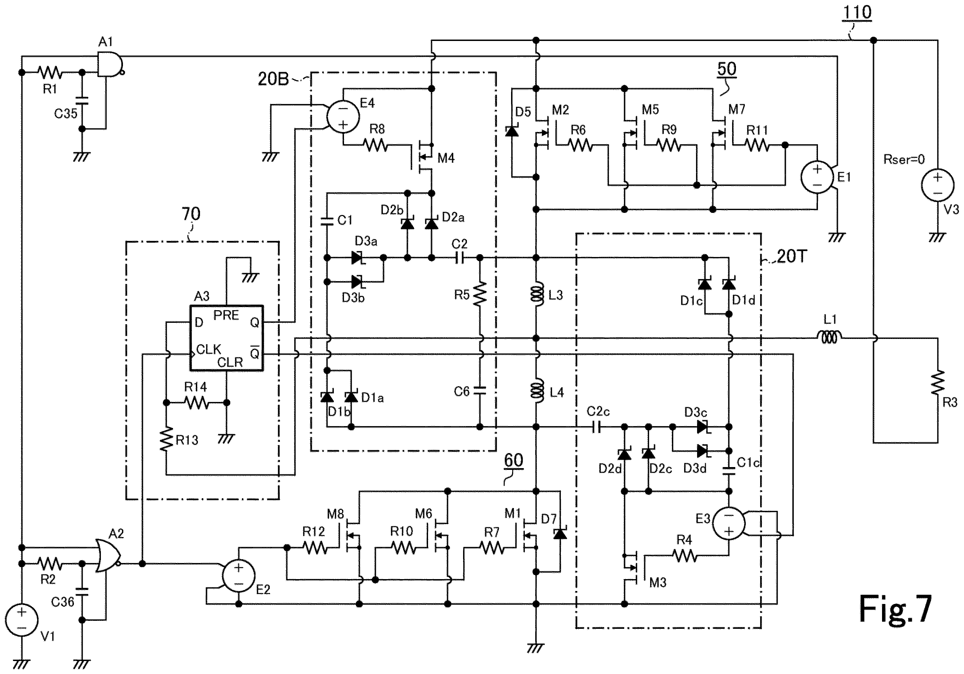

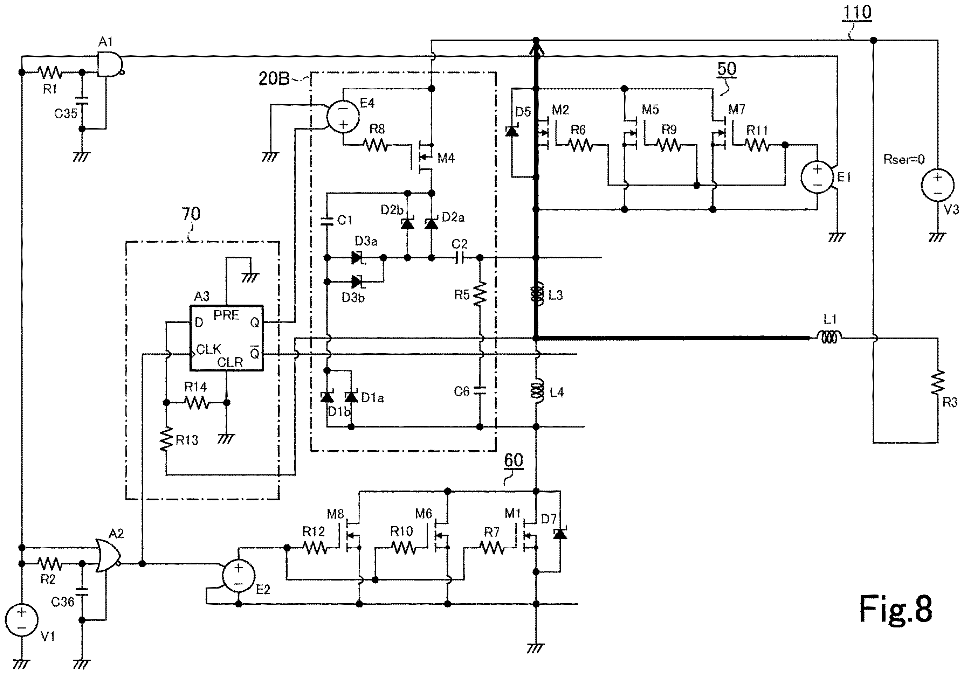

[Fig. 7] circuit diagram of the inverter circuit of the fifth embodiment [Fig. 8] circuit diagram of the inverter circuit of the fifth embodiment, showing the current direction during the main switch-on operation;

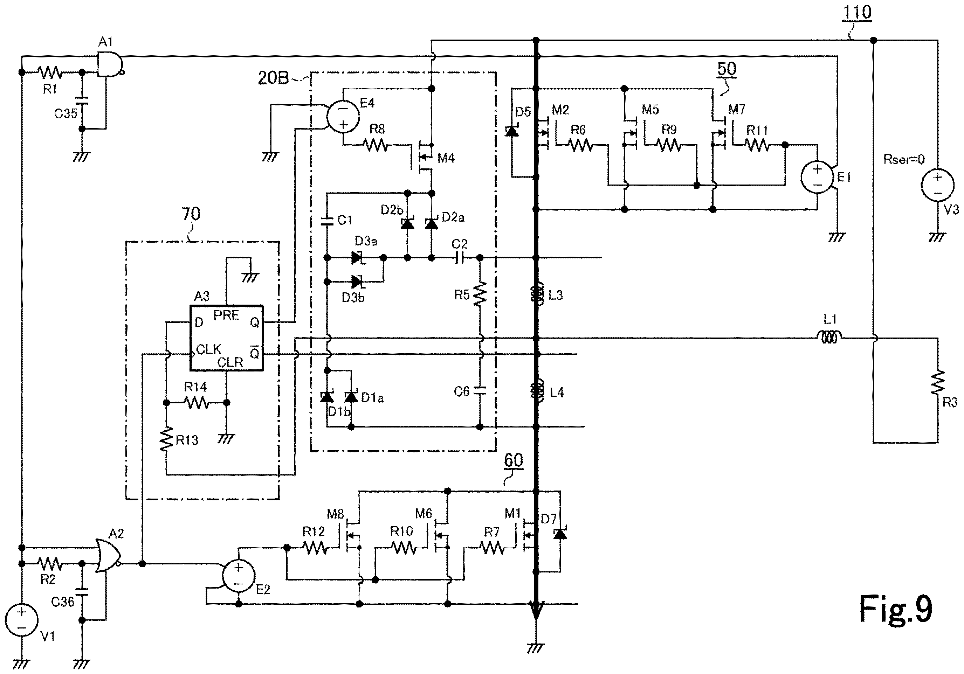

[ Fig. 9] circuit diagram of the inverter circuit of the fifth embodiment, showing the current direction during the main switch-on operation;

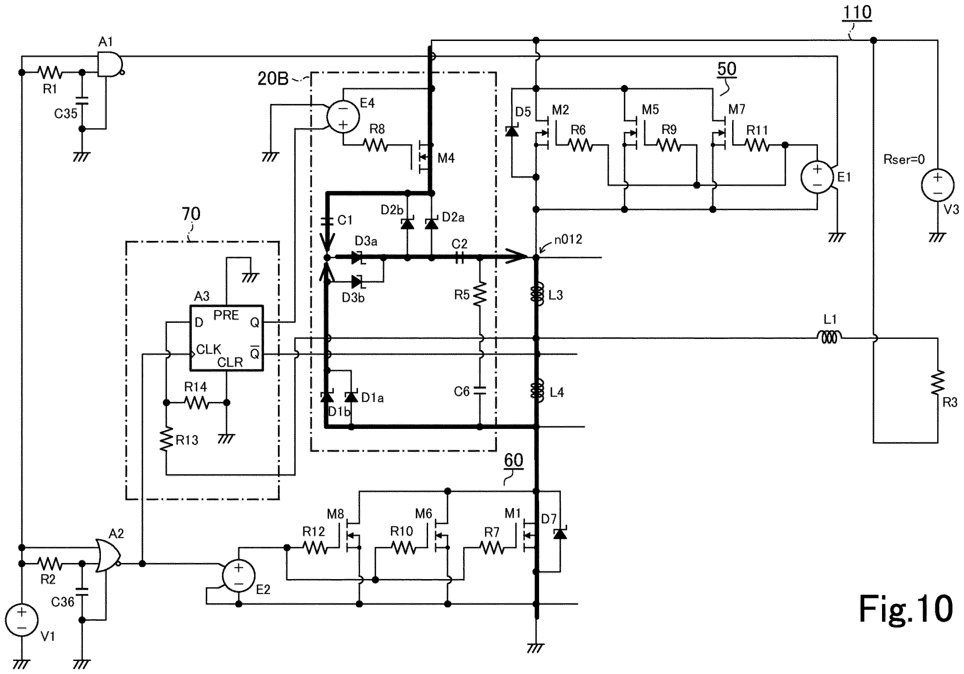

[Fig. 10] circuit diagram of the inverter circuit of the fifth embodiment, showing the current direction during the main switch-on operation;

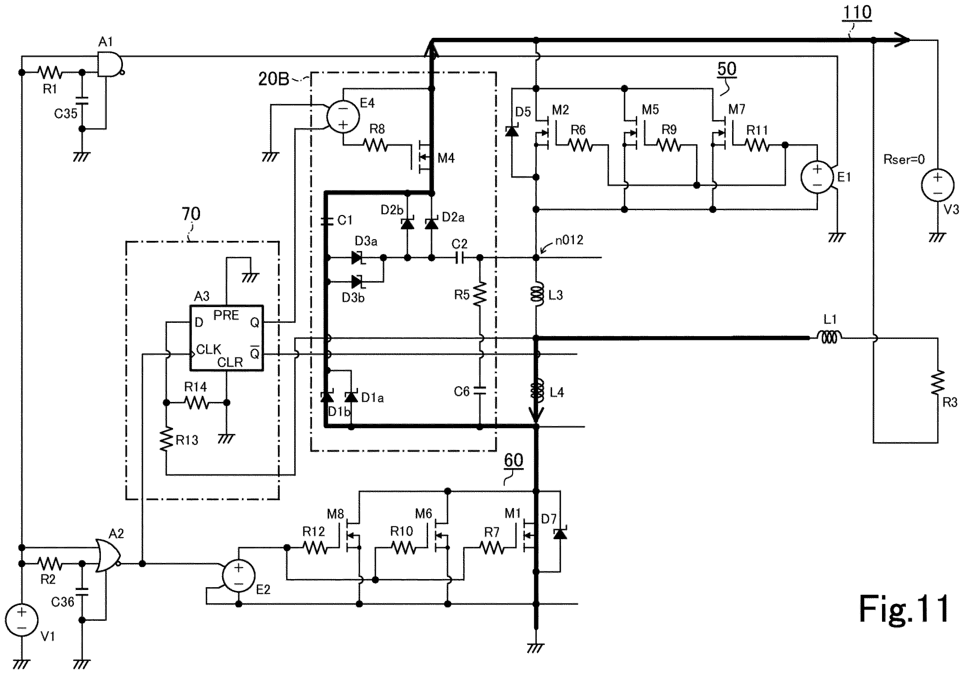

[Fig. 11] circuit diagram of the inverter circuit of the fifth embodiment, showing the current direction during the main switch-off operation;

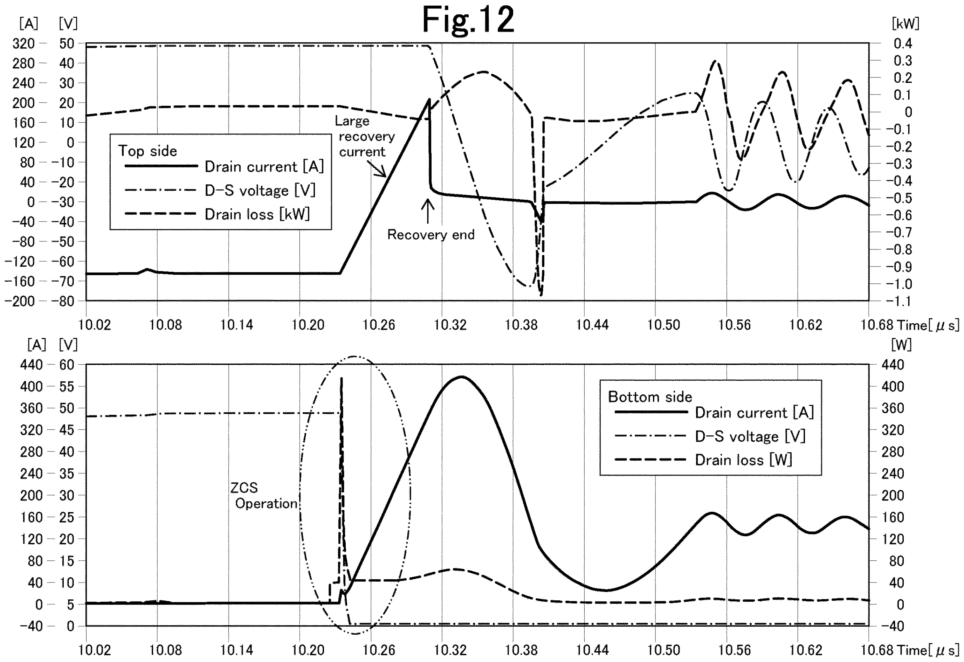

[Fig. 12] showing the drain current, D-S voltage, and drain loss of the top and bottom sides;

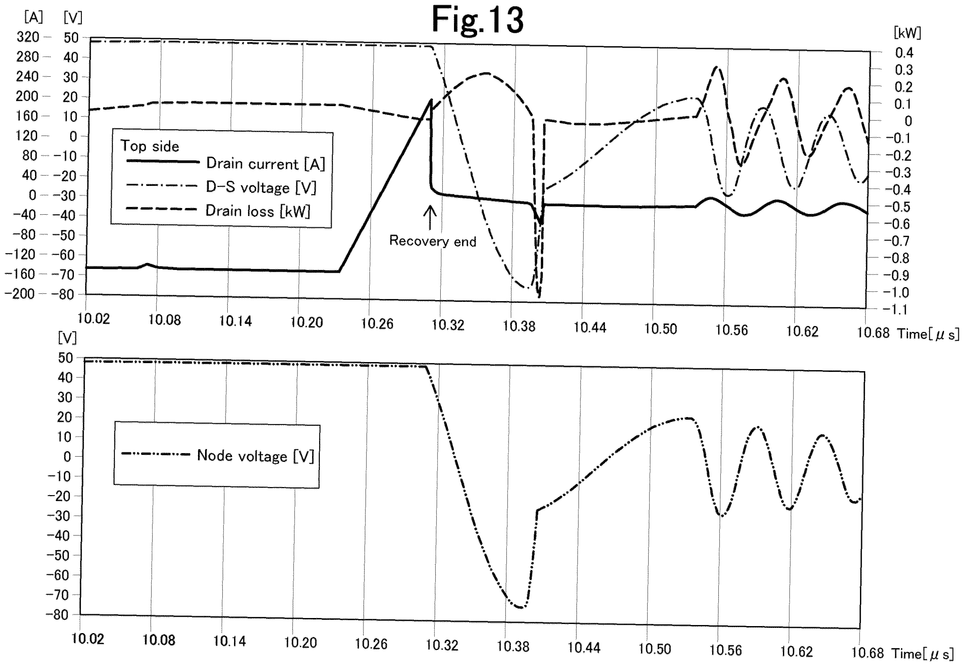

[Fig. 13] showing the drain current, D-S voltage, drain loss, and node voltage of the top side;

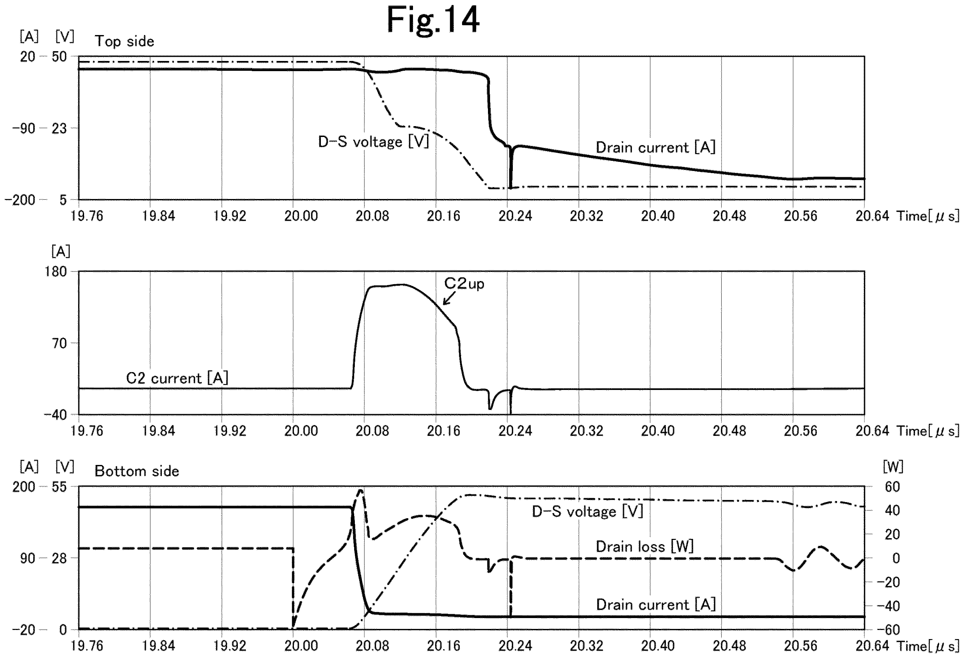

[Fig. 14] showing the drain current, D-S voltage, drain loss, and capacitor C2 current on the top and bottom sides;

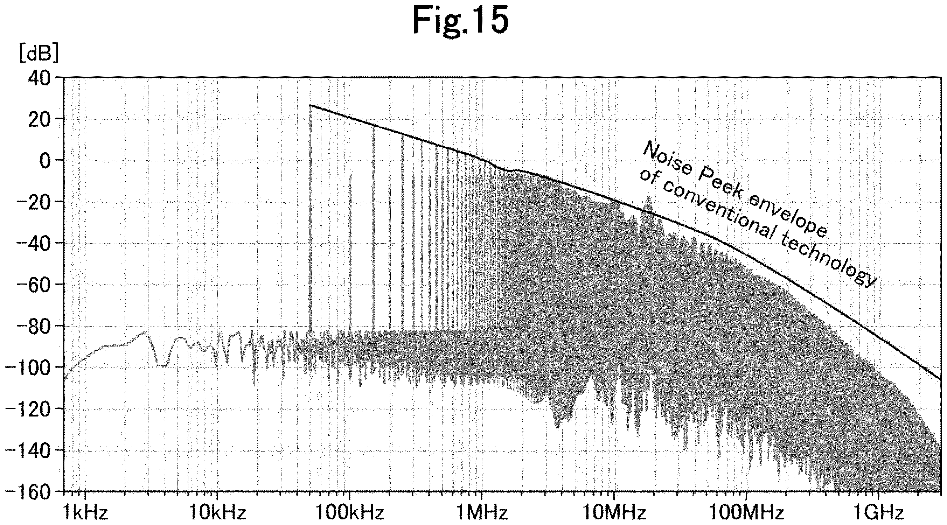

[Fig. 15] FFT analysis results of output voltage waveforms;

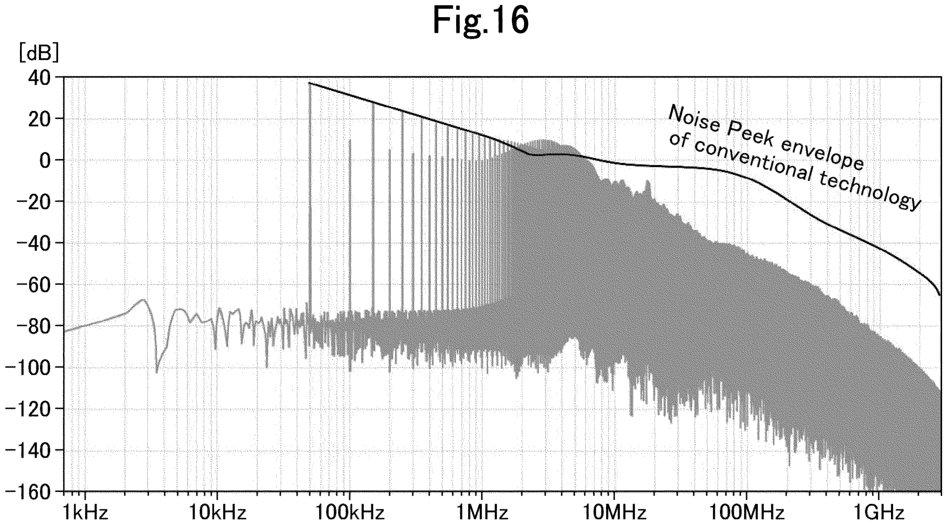

[Fig. 16] FFT analysis results of the power source current waveform;

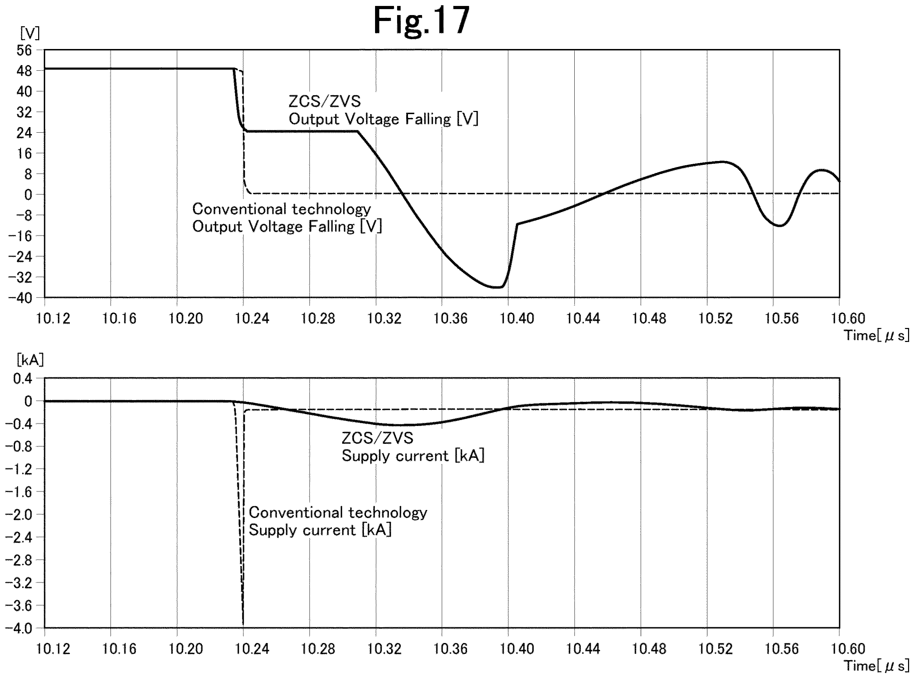

[Fig. 17] showing the falling waveforms of the conventional inverter circuit and the inverter circuit of the fifth embodiment;

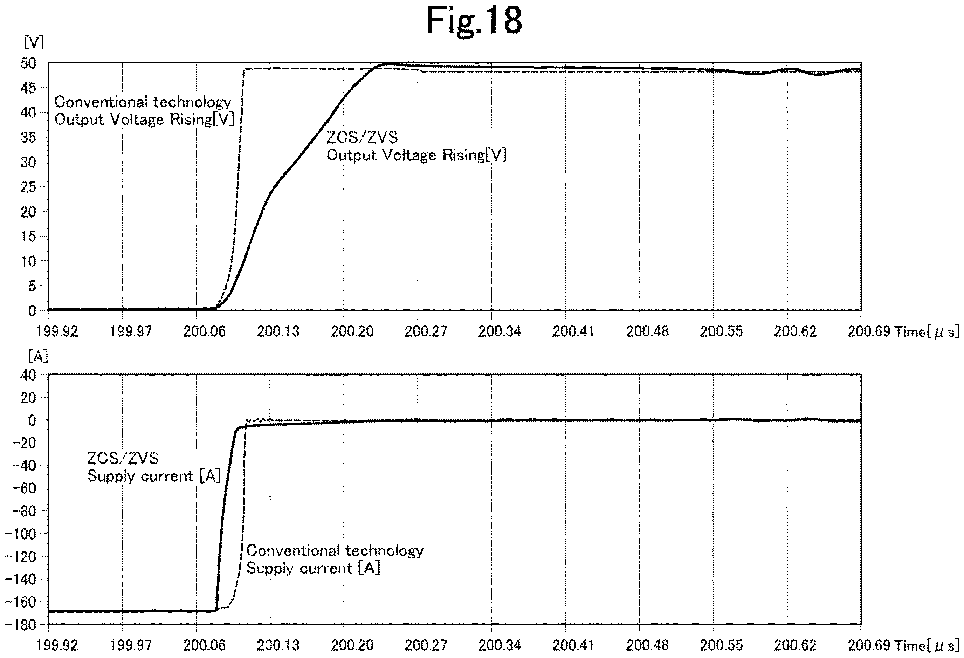

[Fig. 18] rising waveforms of the conventional inverter circuit and the inverter circuit of the fifth embodiment;

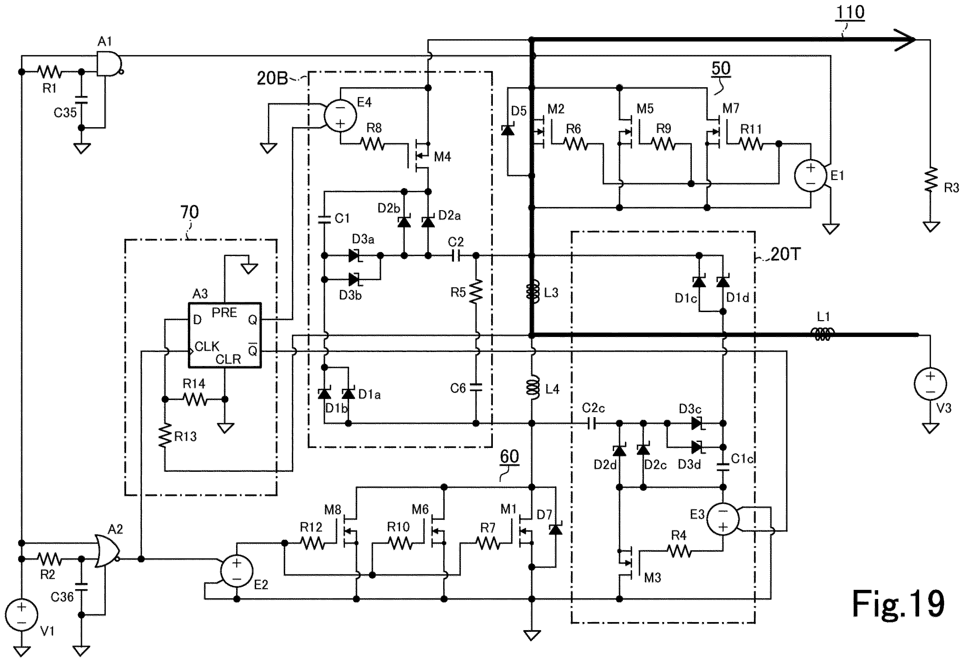

[Fig. 19] circuit diagram showing the regenerative operation of the inverter circuit of the fifth embodiment;

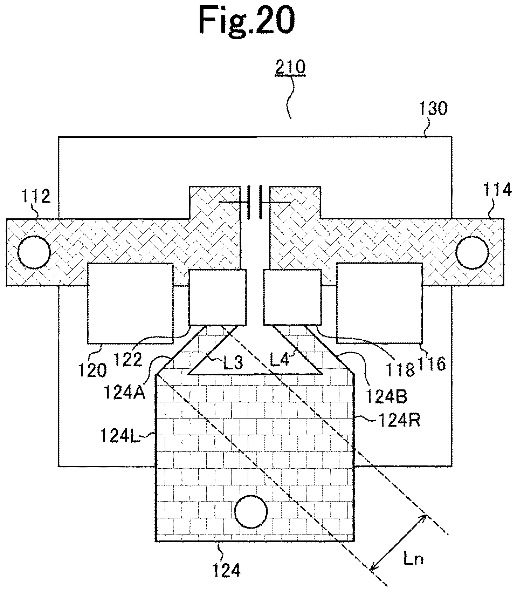

[Fig. 20] schematic diagram of a power module composed of the inverter circuit of the fifth embodiment;

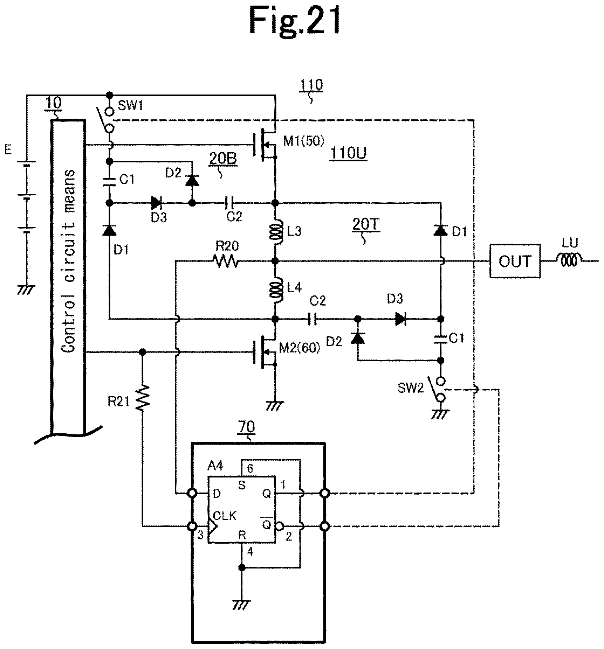

[Fig. 21] circuit diagram of the inverter of the first modification of the fifth embodiment;

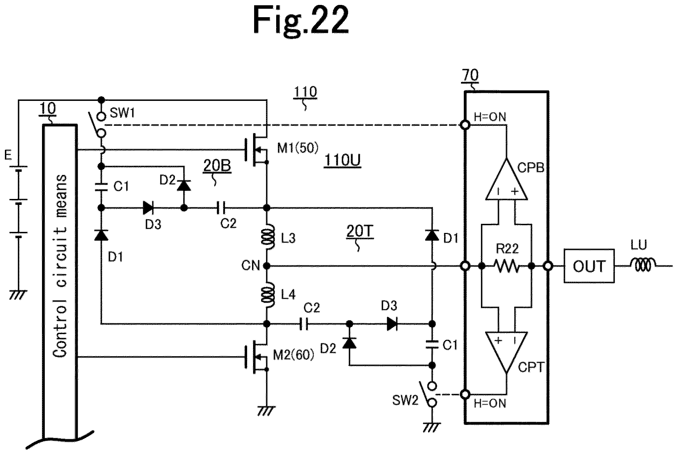

[Fig. 22] circuit diagram of the inverter for the second modification of the fifth embodiment;

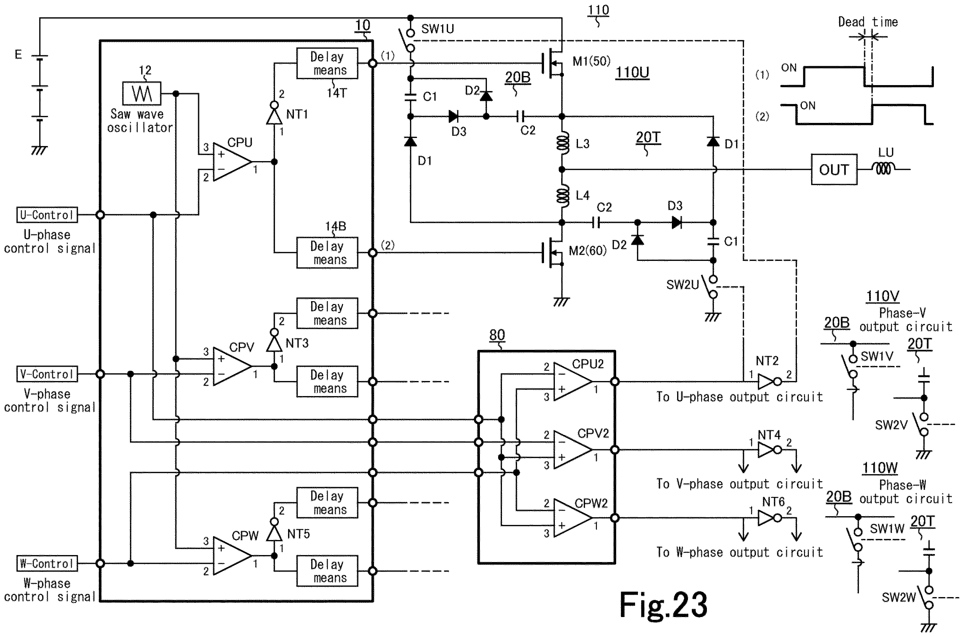

[Fig. 23] circuit diagram of the inverter for the sixth embodiment;

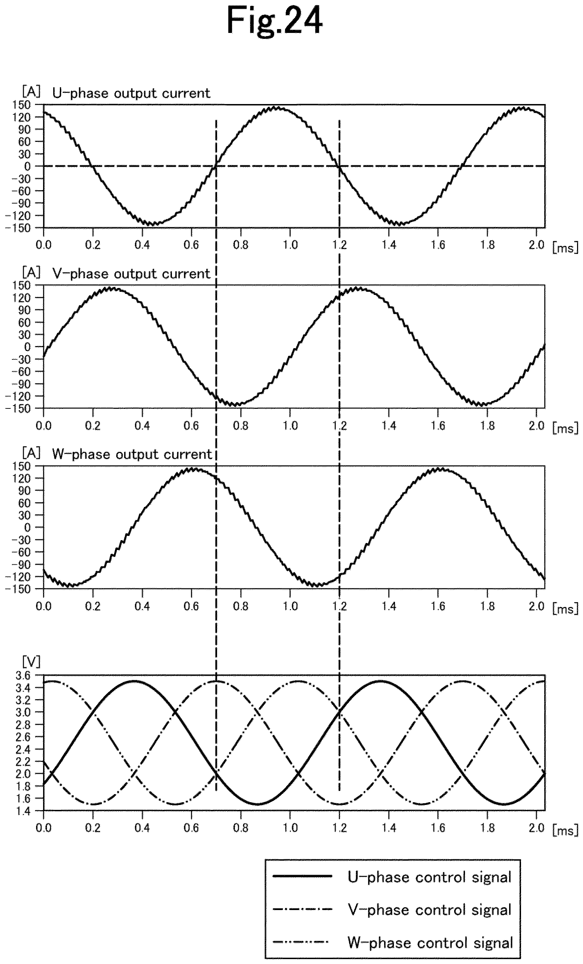

[Fig. 24] U, V, and W phase output currents and U, V, and W phase control signals of the inverter for the sixth embodiment;

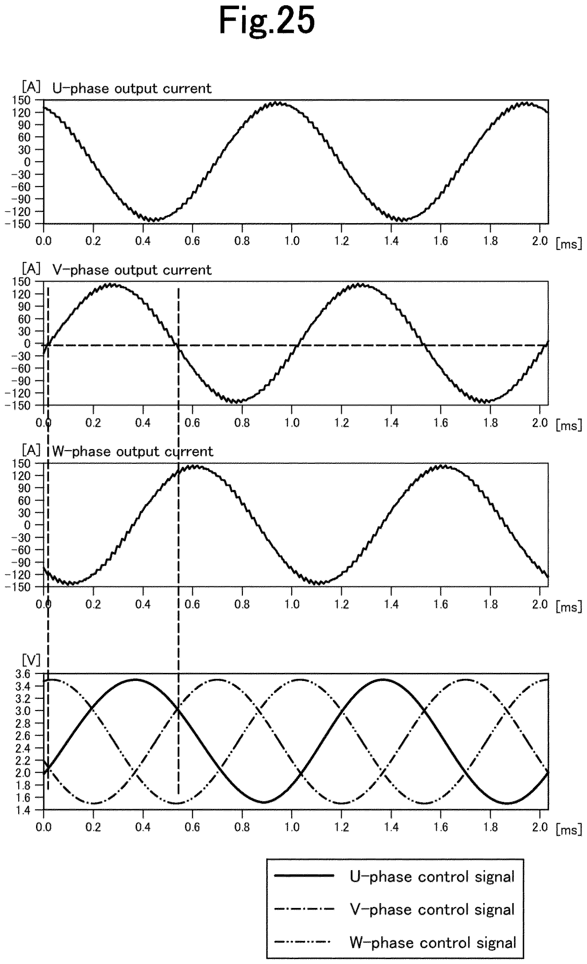

[Fig. 25] U, V, and W phase output currents and U, V, and W phase control signals of the inverter for the sixth embodiment;

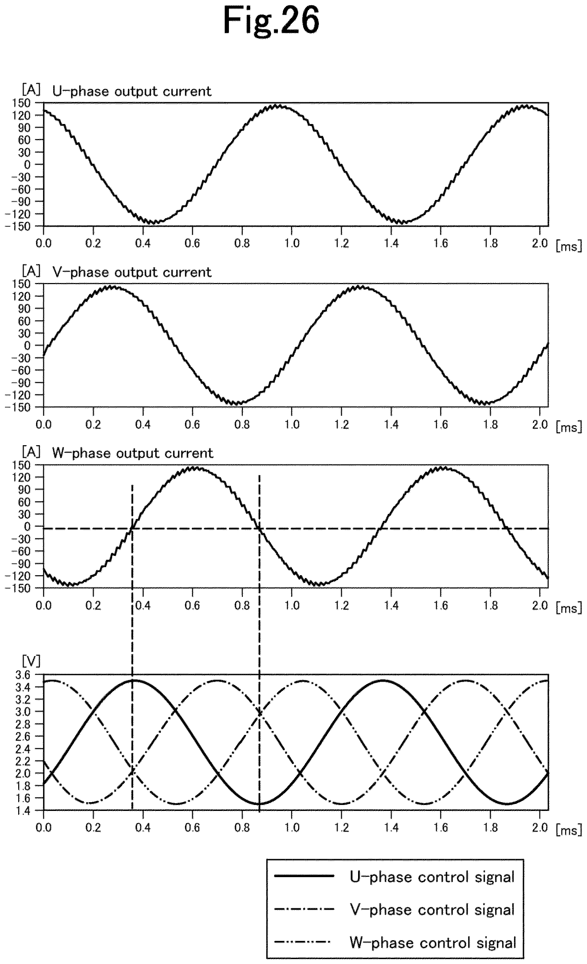

[Fig. 26] U, V, and W phase output currents and U, V, and W phase control signals of the inverter for the sixth embodiment;

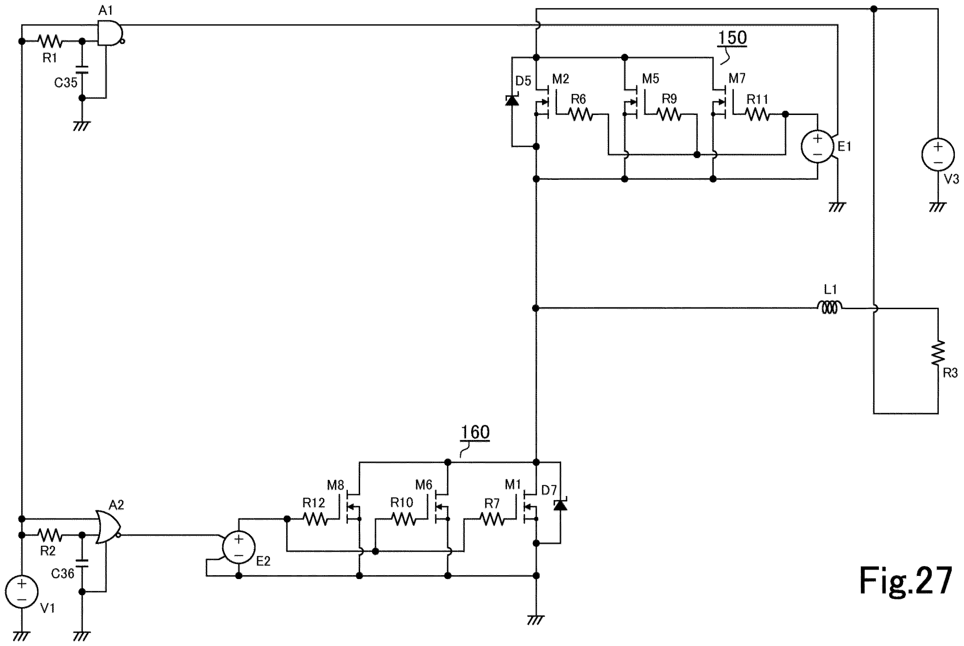

[Fig. 27] circuit diagram of a conventional inverter circuit;

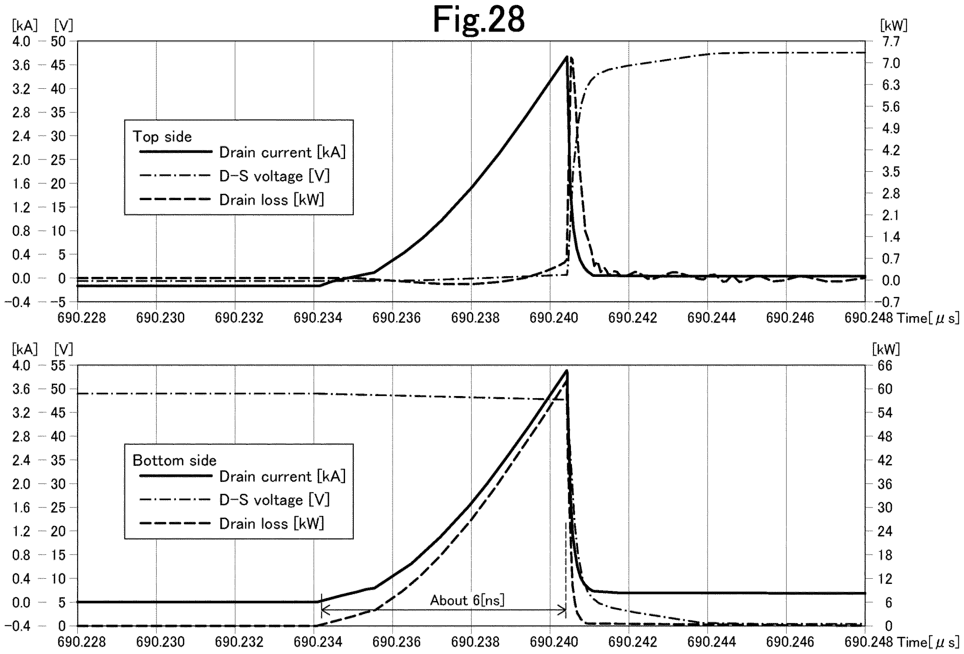

[Fig. 28] simulation results of the voltage, current, and loss of the top switch and bottom switch when the bottom switch is on in a conventional inverter circuit; and

[Fig. 29] simulation results of the voltage, current and loss of the top and bottom switches when the bottom switch is turned off in a conventional inverter circuit.

MODE TO CARRY OUT THE INVENTION

[First embodiment].

Fig. 1 shows the circuit example of a switching circuit according to the first embodiment.
Fig. 1(A) is a circuit example in which the source side of MOFFET(M) is grounded, and Fig. 1 (B) is a circuit example in which a resistive load R is connected to the source side of MOFFET(M).

The switching circuit 110 of the first embodiment drives the load means (resistive load) R by interrupting the power supplied from the power source E. The switching means contains a switching element (MOSFET) M that is driven in one-side switching mode only. The switching circuit 110 is a soft switching method that reduces switching losses by providing a time difference between the voltage applied to the switching means M in the switching circuit and the current flowing through said switching means M. That is, the switching circuit 110 turns on the switch means (MOSFET) M at the timing when the current is zero (ZCS) and turns off the MOSFET (M) at the timing when the voltage is zero (ZVS) by a gate signal from the control circuit means 10.

The switching circuit 110 of the first embodiment shown in Fig. 1(A) has an inductor L arranged between a resistive load R and a MOSFET (M), a first diode D1 and a first capacitor C 1 arranged in series between the MOSFET (M) and the power source E (or ground (Fig. 1(B)), a second diode D2 and a second capacitor C2 connected in parallel to the first diode D1 and the first capacitor C 1 in series via an inductor L, and a third diode D3 arranged between the connection of the first diode D1 and the first capacitor C1 and the connection of the second capacitor C2 and the second diode D2.

The input terminal VB of the resistive load R is connected to the power source E, the first capacitor C1, and the cathode side of the second diode D2. The output terminal OUT of the resistive load R is connected to the connection between the inductor L and the second capacitor C2.

The first diode D 1 is connected to the drain side of the MOSFET (M) so that the anode side of the first diode D1 is connected to the drain side of the MOSFET (M) to prevent the charge of the first capacitor C1 from shorting to the MOSFET (M).

The second diode D2 returns the charge of the second capacitor C2 to the power source E. The cathode side of the second diode D2 is connected to the power source E (or ground (Fig. 1(B)), and the anode side is connected to the second capacitor C2.

The third diode D3 prevents the inductor L from short-circuiting. The anode side of the third diode D3 is connected to the connection between the first diode D1 and the first capacitor C1, and the cathode side is connected to the connection between the second capacitor C2 and the second diode D2.

[On operation of switch element M]

When the switch element M is off, the time that the leftward current flows in the inductor L is "less than 1usec" for a short time. Therefore, the current in the inductor L is usually zero just before the switch element M turns on.

The inductor L is flowing load current while generating + voltage on the left side during the previous off operation. Since the switch means (MOSFET) M turns on at the timing when the current from the inductor L is zero (ZCS), the current of the inductor L is initially zero, so it increases with a specified rise time (time constant). This causes the drain current to increase after the drain voltage of the switch element M reaches zero.

Focusing on the behavior of the inductor L, at the moment the switch means M is turned on, the total current is the sum of the first current flowing in the path of capacitor C 1 - rectifier means D3 - capacitor C2 - inductor L and the second current flowing from power source E through load means R. The first current decreases within a short period of time as capacitors C1 and C2 are charged, but inductor L acts to maintain this decreased current and generates a negative voltage at the right end. Therefore, the OUT terminal becomes a negative voltage below the GND level, and the capacitors C1 and C2 act to divide the voltage of the power source E and the negative voltage applied.

The capacitances of the first capacitor C1 and the second capacitor C2 are adjusted so that the lower end voltage of the first capacitor C1 is 0 V after the first capacitor (capacitor) C1 and the second capacitor (capacitor) C2 are charged. The second capacitor C2 serves to set the first capacitor C1 with the upper end voltage to the supply voltage and the lower end voltage to 0 V. When the lower end voltage of the first capacitor C 1 is set to 0 V, ZVS of the switch element M, described below, is realized.

[Off operation of switch element M]

By the above-mentioned on operation, the first capacitor (capacitor) C1 is charged to a voltage equal to the voltage of the power source E. Just before the switch element M turns off, the load current is flowing in the inductor L. When the switch element M turns off and the current in the inductor L is about to decrease, the inductor L needs to generate a positive voltage at its left end to maintain the previous current value. However, since the lower end of capacitor C1 is 0 V, no such positive voltage is generated, and the voltage at the left end of inductor L remains 0 V. Current flows through rectifier means D 1 to capacitor C1, charging C 1 in the reverse direction, and the drain voltage of switch element M increases. This voltage is the drain voltage of the switch element M. Since the shutoff time of the switch element M is faster than the rise time of the voltage, the ZVS operation of the switch element M is realized.

When the switch element M is turned off in ZVS, the drain current becomes 0A, but the drain voltage starts from 0V, which is equal to the voltage at the lower end of the first capacitor C 1, and the first capacitor C 1 discharges while the regenerative current flows to the power source side. When the first capacitor C 1 is completely discharged, the current in the inductor L is returned to the power source E for a short time through the first rectifier means (diode) D1, the third rectifier means D3, and the second rectifier means D2.

When the OUT terminal is at the voltage of the power source E, the load means R discharges the second capacitor C2 and acts to set the charging voltage of the second capacitor C2 to 0 V. This allows the lower end of the first capacitor C1 to operate to 0 V the next time the switch element M is turned on, and This allows the lower end of the first capacitor C1 to operate at 0V the next time the switch element M turns on. If there is no second rectification means D2, the upper end of the second capacitor C2 remains positively charged, so that even if the switch element M turns on, current cannot flow through the path of the first capacitor C 1 - third rectification means D3 - second capacitor C2.

In the switching circuit of the first embodiment, the energy of the inductor L used to turn on the switch means M at ZCS is stored in the first capacitor C1 while the switch means M is on. The energy (voltage) of the first capacitor C1 is then used to turn off the switch means M at ZVS, and the energy of the first capacitor C1 is returned to the power source side while the switch means M is off, causing the first capacitor C1 to discharge completely. In the conventional inverter circuit of ZCS and ZVS, the energy used for ZCS and ZVS operation is consumed as it is, whereas in the switching circuit of the first embodiment, the energy used for ZCS and ZVS operation is returned to the power source side, thus achieving high efficiency.

[Second embodiment]

Fig. 2 shows the circuit diagram of the switching circuit for the second embodiment.

Fig. 2(A) is a circuit example in which the source side of MOFFET(M) is grounded, and Fig. 2(B) is a circuit example in which an inductive load L1 is connected to the source side of MOFFET(M).

The switching circuit 110 of the second embodiment drives the inductive load L1 by interrupting the power supplied from the power source E.

The switching circuit 110 is a soft-switching system that reduces switching losses by establishing a time difference between the voltage applied to the switch means (MOSFET) M built into the switching circuit and the current flowing through said MOSFET (M). That is, the switching circuit 110 turns on the switch means (MOSFET) M at the timing when the current is zero (ZCS) and turns off the MOSFET (M) at the timing when the voltage is zero (ZVS) with the gate signal from the control circuit means 10.

The switching circuit 110 of the second embodiment shown in Fig. 2(A) has an inductor L4 arranged between an inductive load L1 and MOSFET (M), a first diode D1 and a first capacitor C1 arranged in series between MOSFET (M) and power source E (or ground (Fig. 2(B)), a second diode D2 and a second capacitor C2 connected in parallel to the first diode D1 and the first capacitor C1 arranged in series through inductors L3 and L4, a third diode D3 arranged between the connection of the first diode D1 and the first capacitor C1 and the connection of the second capacitor C2 and the second diode D2, and a rectifier element (flywheel diode) DF to carry flywheel current.

The input terminal VB of the inductive load L1 is connected to the power source E, the first capacitor C1, and the cathode side of the second diode D2. The output terminal OUT of the inductive load L1 is connected to the inductor L3 and the inductor L4.

The first diode D1 is connected to the drain side of the MOSFET (M) with the anode side of the first diode D1 connected to the drain side of the MOSFET (M) to prevent the charge of the first capacitor C 1 from shorting to the MOSFET (M). The second diode D2 returns the charge of the second capacitor C2 to the power source E. The cathode side of the second diode D2 is connected to the power source E, and the anode side is connected to the second capacitor C2. The third diode D3 prevents the inductors L3 and L4 from short-circuiting. The anode side of the third diode D3 is connected to the connection between the first diode D1 and the first capacitor C1, and the cathode side is connected to the connection between the second capacitor C2 and the second diode D2. The flywheel diode DF has its anode side connected in series with the inductor L3 and its cathode side connected to the power source or ground and the input terminal VB of the inductive load L1.

The output terminal OUT of the inductive load L1 is connected to the connection points of the two divided inductors L3 and L4, and the input terminal VB of the inductive load L1 is connected to the power source E. In the circuit example in Fig. 2(B), the ground terminal GND of the inductive load L1 is connected to ground.

[Switch-on operation].

Flywheel diode DF shall operate in flywheel circuit operation: when MOSFET (M) is off, the current in inductive load L1 is decreasing, so load current is flowing while inductive load L1 generates + voltage on the lower side to maintain current.

The aforementioned current direction and value is maintained while flowing in the forward direction of the flywheel diode DF. Since MOSFET (M) is subsequently turned on, a reverse recovery current flows in flywheel diode DF, and the current in inductor L3 rapidly reverses, while the current in inductor L4 has a predetermined rise time (increasing with a time constant) → this causes the drain current of MOSFET (M) increases after the drain voltage reaches 0 V, and ZCS operation during the on transition of MOSFET (M) is realized. In addition, the recovery current (energy) on the flywheel diode DF side becomes current and is stored in the inductors L3 and L4, and is regenerated to the power source in the operation described in the next section and thereafter, thus improving the power conversion efficiency.

Focusing on the behavior of inductor L3, a large recovery current of flywheel diode DF flows through inductor L3 when MOSFET (M) is on, but the current rapidly decreases as the recovery current disappears. Then, in order to maintain the current up to that point, inductor L3 generates a large voltage with the upper part having a negative polarity. As a result, capacitor C2 and C1 are charged through diodes D1 and D3, respectively, with the left side of capacitor C2 positive and the top of capacitor C 1 positive, and the previous recovery energy is stored in both capacitors. In this way, a large negative surge voltage is generated in the upper part of the inductor L3. To prevent this voltage from exceeding the withstand voltage of the flywheel diode DF, the capacitance settings of capacitors C1 and C2 are important.

The ratio of capacitors C1 and C2 is set so that the voltage at the lower end of capacitor C 1 after capacitors C 1 and C2 are charged is 0 V to achieve ZVS during MOSFET off operation as described below.

[main switch off operation]

The capacitor C1 is charged to a voltage E equal to the supply voltage by the aforementioned on operation. Therefore, when MOSFET (M) is turned off, the drain current becomes 0A, but the drain voltage starts from 0V, which is equal to the voltage at the lower end of capacitor C1, as the voltage at the lower end of inductive load L1 rises due to the decrease in current of inductive load L1, and capacitor C1 discharges while regenerative current flows to the power source side. Since flywheel diode DF is in the off period during this operation, the capacitor C 1 current does not flow back through flywheel diode DF, inductor L3, inductor L4, and diode D1, so that no power is lost. When the capacitor C 1 is completely discharged, the flywheel current of the above inductive load L1 is returned to the power source via diode D1, diode D3, and diode D2 for a short time, but immediately after this the voltage at the top of inductor L3 reaches the on potential of flywheel diode DF, so the power loss of the above diodes D 1, D3, and D2 can be kept small because the power is returned to the power source through the flywheel diode DF.

ZVS/ZCS operation is also possible with the circuit configuration shown in Fig. 3, which uses a single inductor L instead of the divided inductors L3 and L4 shown in Fig. 2(A) and Fig. 2(B).

The following is an explanation of the operation of the switching circuit shown in Fig. 3 when inductor L3 is eliminated and only one inductor L is used.

When a DC motor is driven by the known PWM as an inductive load, a capacitor C is often inserted in parallel with the load to reduce the brush noise of the DC motor. In this case, when the MOSFET (M) turns on and the recovery current of the flywheel diode DF, which is the flywheel rectification method, flows through the inductor L and the current value tries to decrease as the hot carrier (hole) causing the recovery current of the flywheel diode DF decreases. The point that inductor L generates a negative voltage at its upper end in an attempt to hold the current up to that point, and this voltage is divided by capacitor C2 and capacitor C1 to make the lower end voltage of capacitor C1 to GND potential (0V), thereby realizing ZVS operation when the MOSFET (M) is turned off thereafter, as mentioned above. However, when there is a capacitor C in parallel with the load, the voltage at the lower end of capacitor C 1 does not reach 0V because the generation of the above negative voltage is suppressed and the voltage does not drop sufficiently. In addition, the voltage at this time is greatly affected by the capacitance value of capacitor C.

Therefore, in order to generate a constant negative voltage above without being affected by the capacitance value of capacitor C, it is effective to divide L into L3 and L4 as shown in Fig. 2.

This has the excellent effect that the voltage at the lower end of capacitor C1 can be set to 0 V because the above negative voltage value is stabilized, and the lower end voltage of flywheel diode DF can be accurately controlled so that the reverse breakdown voltage of flywheel diode DF is not exceeded.

[Third Embodiment]

Fig. 4 shows the circuit diagram of the switching circuit for the third embodiment.

Fig. 4(A) shows a circuit configuration in which the MOSFET (M1) side operates as a flywheel circuit and MOSFET (M2) acts as the main switch.

Fig. 4(B) shows a circuit configuration in which the MOSFET (M2) side operates as a flywheel circuit and MOSFET (M1) acts as the main switch.

[circuit configuration]

The switching circuit 110 of the third embodiment drives the inductive load L1 by interrupting the power supplied from the power source E.

The switching circuit 110 is a soft switching system that reduces switching losses by establishing a time difference between the voltage applied to the switch means (MOSFET) M2 built into the switching circuit and the current flowing through said MOSFET (M2). That is, the switching circuit 110 of the third embodiment shown in Fig. 4(A) turns on MOSFET (M2) at the timing when the current is zero (ZCS) and turns off MOSFET (M2) at the timing when the voltage is zero (ZVS) by a gate signal from the control circuit means 10.

The switching circuit 110 of the third embodiment shown in Fig. 4(A) contains an inductor L4 arranged between an inductive load L1 and MOSFET (M2), a first diode D1 arranged in series between MOSFET (M2) and power source E (or ground (Fig. 4(B)), a first capacitor C1, a second diode D2 connected in parallel to the first diode D1 and the first capacitor C1 through inductors L3 and L4, a second capacitor C2, a third diode D3 placed between the connection of the first diode D1 and the first capacitor C1 and the connection of the second capacitor C2 and the second diode D2. Diode D3, and a switching element (MOSFET (M1)) to carry the flywheel current.

The input terminal VB of the inductive load L1 is connected to the power source E, the first capacitor C1, and the drain side of the MOSFET (M1) (the ground terminal GND of the inductive load L1 is connected to ground (Fig. 4(B)). The output terminal OUT of the inductive load L1 is connected to the connection with the inductors L3 and L4.

The first diode D1 is connected to the drain side of the MOSFET (M2) so that the anode side of the first diode D1 is connected to the drain side of the MOSFET (M2) to prevent the charge of the first capacitor C1 from shorting to the MOSFET (M2).

The second diode D2 returns the charge of the second capacitor C2 to the power source E. The cathode side of the second diode D2 is connected to the power source E, and the anode side is connected to the second capacitor C2.

The third diode D3 prevents the inductors L3 and L4 from short-circuiting. The anode side of the third diode D3 is connected to the connection between the first diode D1 and the first capacitor C1, and the cathode side is connected to the connection between the second capacitor C2 and the second diode D2.

In the MOSFET (M1), the source side is connected in series with the inductor L3 and the drain side is connected to the input terminal VB of the inductive load L1.

The output terminal OUT of the inductive load L1 is connected to the connection points of the two divided inductors L3 and L4, and the input terminal VB of the inductive load L1 is connected to the power source E.

[Main switch-on operation].

As shown in Fig. 4(A), there is an inductive load L1, MOSFET (M2) acts as the main switch, and MOSFET (M1) shall be in flywheel circuit operation. When the MOSFET (M2) is off, the current in the inductive load L1 is decreasing, so the load current is flowing while the inductive load L1 generates a + voltage on the lower side to maintain the current.

Next, MOSFET (M1) is turned off ahead of time by the dead time, but the aforementioned current direction and value are maintained. Since MOSFET (M2) turns on after a delay, the body diode reverse recovery current flows in MOSFET (M1), the current in inductor L3 reverses rapidly and the current in inductor L4 increases with a predetermined rise time (time constant) since the initial value is 0 → this causes the drain current increases after the drain voltage of MOSFET (M2) reaches 0 V, and ZCS operation during the main switch-on transition is realized. In addition, the switch recovery current (energy) on the MOSFET (M1) side becomes a current that is stored in inductors L3 and L4, and is regenerated to the power source in the operation described in the next section and thereafter, thereby improving the power conversion efficiency.

Focusing on the behavior of inductor L3, a large recovery current of MOSFET (M1) flows through inductor L3 when MOSFET (M2) is on, but the current rapidly decreases as the recovery current disappears. Then, inductor L3 generates a large voltage with the upper part negative polarity to maintain the current up to that point. As a result, capacitor C2 and C 1 are charged through diodes D1 and D3, respectively, with the left side of capacitor C2 positive and the top of capacitor C1 positive, and the previous recovery energy is stored in both capacitors. In this way, a large negative surge voltage is generated in the upper part of the inductor L3. To prevent this voltage from exceeding the withstand voltage of the MOSFET (M1), the capacitance settings of capacitors C1 and C2 are important.

The ratio of capacitors C1 and C2 is set so that the voltage at the lower end of capacitor C 1 after capacitors C 1 and C2 are charged is 0 V to achieve ZVS during the off operation of the MOSFET (M2) side MOSFET as described below.

[Main switch off operation]

The capacitor C1 is charged to a voltage E equal to the power source voltage by the aforementioned on operation. Therefore, when the MOSFET on the MOSFET (M2) side, which is the main switch, is turned off, the drain current becomes 0A, but the drain voltage starts from 0V as the voltage at the lower end of the inductive load L1 rises due to the decrease in the current of L1, which is equal to the voltage at the lower end of capacitor C 1 and is regenerated to the power source side. The capacitor C 1 discharges while the current flows. Since MOSFET (M1) is in the dead time period during this operation, the capacitor C 1 current does not flow back through MOSFET (M1), inductor L3, inductor L4, and diode D1, thus preventing power loss. When the capacitor C 1 is completely discharged, the flywheel current of the above inductive load L1 returns to the power source via diode D1, diode D3, and diode D2 for a short time, but immediately after this, the voltage at the top of inductor L3 reaches the source potential of MOSFET (M2). The power loss of the above diodes D1, D3) and D2 can be kept small because the power is returned to the power source via MOSFET (M1).

As described above, the off operation of the main switch MOSFET (M2) realizes ZVS operation, in which the voltage rises after the current reaches zero, thereby suppressing switching losses.

[Fourth embodiment]

Fig. 5 shows a circuit diagram of an inverter circuit for the fourth embodiment.

The inverter circuit 110 for the fourth embodiment is for driving a 3-phase motor with a U-phase coil LU, V-phase coil LU, and W-phase coil LW. The inverter circuit 110 for the fourth embodiment consists of a U-layer inverter circuit 110U for driving the U-phase coil LU, a V-layer inverter circuit 110V for driving the V-phase coil LV, and a W-layer inverter circuit 110W for driving the W-phase coil LW. The U-layer inverter circuit 110U, the V-layer inverter circuit 110V, and the W-layer inverter circuit 110W consist of the same configuration.

[circuit configuration].

The U-layer inverter circuit 110U of the switching circuit 110 of the fourth embodiment contains a half-bridge inverter with a top inverter switch 50 and a bottom inverter switch 60, a top-side auxiliary circuit 20T that performs ZVS/ZCS operation with a gate signal from control circuit means 10 when the top inverter switch 50 is turned on or off, and a bottom-side auxiliary circuit 20B that performs ZVS/ZCS operation with a gate signal from control circuit means 10 when bottom inverter switch 60 is turned on or off.

The U-layer inverter circuit 110U further contains a top-side inductor L3 connected between the top inverter switch 50 and the load means (U-phase coil LU), which performs ZCS operation during the on transition of the top inverter switch 50 and the bottom inverter switch 60, and a bottom side inductor L4, which is connected between the bottom inverter switch 60 and the U-phase coil LU and also connected to the top side inductor L3.

And the top side auxiliary circuit 20T has a first diode D1 and a first capacitor C1 arranged in series between the top inverter switch 50 and ground, a second diode D2 and a second capacitor C2 connected in parallel via inductors L3 and L4 to a first diode D1 and a first capacitor C1 arranged in series, and a third diode D3 arranged between the connection of the first diode D1 and the first capacitor C 1 and the connection of the second capacitor C2 and the second diode D2.

And the bottom side auxiliary circuit 20B has a first diode D1 and a first capacitor C1 arranged in series between the bottom inverter switch 60 and the power source E, a second diode D2 and a second capacitor C2 connected in parallel via inductors L3 and L4 to the first diode D1 and first capacitor C1 arranged in series, and a third diode D3 arranged between the connection of the first diode D1 and the first capacitor C1 and the connection of the second capacitor C2 and the second diode D2.

The output terminal OUT of the U-layer inverter circuit 110U connected to the connection between the two divided inductors L3 and L4 is connected to one end of the inductive load U-phase coil LU, and the other end of the inductive load U-phase coil LU is connected to the inductive load V-phase coil LV and the other end of the inductive load W-phase coil LW.

In the bottom side auxiliary circuit 20B, the first diode D1 is connected to the drain side of the MOSFET (M2) so that the anode side of the first diode D1 is connected to the drain side of the MOSFET (M2) to prevent the charge of the first capacitor C 1 from shorting to the MOSFET (M2).

The second diode D2 returns the charge of the second capacitor C2 to the power source E. The cathode side of the second diode D2 is connected to the power source E, and the anode side is connected to the second capacitor C2.

The third diode D3 prevents the inductors L3 and L4 from short-circuiting. The anode side of the third diode D3 is connected to the connection between the first diode D1 and the first capacitor C 1, and the cathode side is connected to the connection between the second capacitor C2 and the second diode D2.

In the MOSFET (M1), the source side is connected in series with the inductor L3 and the drain side is connected to the power source E.

Circuit Operation

[Current Direction Detection Circuit]

The current direction detection circuit 70 in Fig. 5 detects the current direction. The current direction detection circuit 70 determines whether the load current is flowing out or into the inverter circuit according to the level of the output pin at the timing when the MOSFET (M2) is turned on. When the current direction of the inductive load (U-phase coil) LU is to the right in the figure, the voltage level on the left side of the inductive load LU becomes "L" because the inductive load LU prevents the current in this direction from decreasing. In this case, the top switch side MOSFET (M1) becomes the main switch and the bottom switch side MOSFET (M2) becomes the flywheel switch. Therefore, the bottom switch ZCS/ZVS circuit 20B is unnecessary, so switch SW1 is turned off to shut off the circuit elements (if the bottom switch ZCS/ZVS circuit 20B and the top switch ZCS/ZVS circuit 20T are connected simultaneously, unintended circuit operation will occur and losses will increase).

Similarly, when the current direction of the inductive load LU is in the left direction, the top switch ZCS/ZVS circuit 20T is interrupted by turning off switch SW2.

Reason why switches SW1 and SW2 are required in the inverter circuit of the fourth embodiment

As shown in Fig. 6, when the load current flows in the left direction through the inductive load LU, the top switch side MOSFET (M1) becomes a flywheel switch and the bottom switch side MOSFET (M2) becomes the main switch. In this case, when the bottom switch side MOSFET (M2) turns on, a negative voltage is generated at the top end of inductor L3 and a positive voltage at the bottom end. However, if the top switch ZCS/ZVS circuit is connected, current flows in the direction shown in Fig. 6, and the top end of inductor L3 does not become negative voltage. Therefore, depending on the load current direction, it is necessary to control SW1 or SW2 to shut off the ZCS/ZVS circuit on the flywheel side.

[Main switch-on operation].

As shown in Fig. 5, assume that there is an inductive load LU and MOSFET (M2) acts as the main switch with switch SW1 on and MOSFET (M1) has flywheel circuit operation with switch SW2 off. When MOSFET (M2) is off, the current in the inductive load LU is reduced. The load current is flowing while the inductive load LU generates a + voltage on the left side to maintain the current.

Next, MOSFET (M1) is turned off ahead of time by the dead time, but the aforementioned current direction and value are maintained. Since MOSFET (M2) turns on after a delay, the body diode reverse recovery current flows in MOSFET (M1), the current in inductor L3 reverses rapidly and the current in inductor L4 increases with a predetermined rise time (time constant) since the initial value is 0 → this causes the drain current increases after the drain voltage of MOSFET (M2) reaches 0 V, and ZCS operation during the main switch-on transition is realized. In addition, the switch recovery current (energy) on the MOSFET (M1) side becomes a current that is stored in inductors L3 and L4, and is regenerated to the power source in the following operation, thereby improving the power conversion efficiency.

Focusing on the behavior of inductor L3, a large recovery current of MOSFET (M1) flows through inductor L3 when MOSFET (M2) is on, but the current rapidly decreases as the recovery current disappears. Then, inductor L3 generates a large voltage with the upper part negative polarity to maintain the current up to that point. As a result, capacitor C2 and C 1 are charged through diodes D1 and D3, respectively, with the left side of capacitor C2 positive and the top of capacitor C1 positive, and the previous recovery energy is stored in both capacitors. In this way, a large negative surge voltage is generated in the upper part of the inductor L3. To prevent this voltage from exceeding the withstand voltage of the MOSFET (M1), the capacitance settings of capacitors C1 and C2 are important.

The ratio of capacitors C 1 and C2 is set so that the voltage at the lower end of capacitor C 1 after capacitors C 1 and C2 are charged is 0 V to achieve ZVS during the off operation of the MOSFET (M2) side MOSFET as described below.

[main switch off operation].

The capacitor C 1 is charged to a voltage E equal to the supply voltage by the aforementioned on operation. Therefore, when the MOSFET on the MOSFET (M2) side, which is the main switch, is turned off, the drain current becomes 0A, but the drain voltage starts from 0V as the voltage at the left end of the inductive load LU rises due to the decrease in the current of the inductive load LU, which is roughly equal to the voltage at the lower end of capacitor C 1 and regenerates to the power source side. The capacitor C1 discharges while the current flows. Since MOSFET (M1) is in the dead time period during this operation, the capacitor C 1 current does not flow back through MOSFET (M1), inductor L3, inductor L4, and diode D1, thus preventing power loss. When capacitor C1 is completely discharged, the flywheel current of the above inductive load LU returns to the power source via diode D1, diode D3, and diode D2 for a short time, but immediately after this, the voltage at the top of inductor L3 reaches the source potential of MOSFET (M2). The power loss of the above diodes D1, D3, and D2 can be kept small because the power is returned to the power source via MOSFET (M1).

In this way, the off operation of the main switch MOSFET (M2) realizes ZVS operation, in which the voltage rises after the current becomes zero, and the switching loss is suppressed.

[Fifth embodiment].

Fig. 7 shows the circuit diagram of the inverter circuit for the fifth embodiment.

The inverter circuit for the fifth embodiment is for driving a 3-phase motor with a U-phase coil L1, a V-phase coil not shown, and a W-phase coil, as in the fourth embodiment. In Fig. 7, only the U-layer inverter circuit 110 for driving the U-phase coil L1 is shown in the fifth embodiment, while the other V-layer and W-layer inverter circuits consist of the same configuration.

[Circuit Configuration]

The U-layer inverter circuit 110 of the switching circuit of the fifth embodiment contains a half-bridge inverter having a top inverter switch 50 and a bottom inverter switch 60, a top-side auxiliary circuit 20T that performs ZVS/ZCS operation with a signal from control circuit means A1 and A2 when the top inverter switch 50 is turned on and off, and a bottom side auxiliary circuit 20B that performs ZVS/ZCS operation with a signal from control circuit means A1 and A2 when bottom inverter switch 60 is turned on and off.

The U-layer inverter circuit 110 further has a top-side inductor L3 connected between the top inverter switch 50 and the load means (U-phase coil L1) that performs ZCS operation during the on transition of the top inverter switch 50 and the bottom inverter switch 60, and a bottom-side inductor L4 connected between bottom inverter switch 60 and U-phase coil L1 and also connected to top-side inductor L3.

And the top side auxiliary circuit 20T contains a first diode D1 (D1c, D1d) and a first capacitor C1c arranged in series between the top inverter switch 50 and ground, a second diode D2 (D2c, D2d) and a second capacitor C2c connected in parallel to the first diode D1 (D1c, D1d) and the first capacitor C1c arranged in series through inductors L3 and L4, and a third diode D3 (D3c, D3d) located between the connection of the first diode D 1 (D1c, D1d) and the first capacitor C1c and the connection of the second capacitor C2c and the second diode D2 (D2c, D2d).

And the bottom side auxiliary circuit 20B contains a first diode D1 (D1a, D1b) and a first capacitor C1 arranged in series between the bottom inverter switch 60 and the power source E, a second diode D2 (D2a, D2b) and a second capacitor C2 connected in parallel via inductors L3 and L4 to the first diode D1 (D1a, D1b) and the first capacitor C1 arranged in series, and a third diode D3 (D3a,D 13) located between the connection of the first diode D1 (D1a,D1b) and the first capacitor C1 and the connection of the second capacitor C2 and the second diode D2 (D2a,D2b).

One end side of the inductive load U-phase coil L1 is connected to the connection between the two divided inductors L3 and L4, and the other end of the inductive load U-phase coil L1 is connected to the power source. Resistor R3 represents the portion of resistance in the inductive load U-phase coil L1.

In the bottom side auxiliary circuit 20B, the first diodes D1 (D1a, D1b) are connected to the drain side of the MOSFET (M2) so that the anode side of the first diode D 1 (D1a, D1b) is connected to the drain side of the MOSFET (M2) to prevent the charge in the first capacitor C 1 from shorting to the MOSFET (M2).

The second diodes D2 (D2a, D2b) return the charge of the second capacitor C2 to the power source E. The cathode side of the second diode D2 (D2a, D2b) is connected to the power source E, and the anode side is connected to the second capacitor C2.

The third diodes D3 (D3a, D3b) prevent the inductors L3 and L4 from short-circuiting. The anode side of the third diode D3 (D3a,D3b) is connected to the connection between the first diode D1 (D1a,D1b) and the first capacitor C 1, and the cathode side is connected to the connection between the second capacitor C2 and the second diode D2 (D2a,D2b).

The source side of the MOSFET (M1) is connected in series with the inductor L3, and the drain side is connected to the power source E.

Circuit Operation

[Current Direction Detection Circuit]

The current direction detection circuit 70 in Fig. 7 detects the current direction. The current direction detection circuit 70 determines whether the load current is in the outgoing direction or the ingoing direction to the inverter circuit according to the level of the output pin at the timing when the bottom switch 60 is turned on. Specifically, the clock pin CLK of flip-flop A3 is the input signal of the gate driver of the MOSFET on the bottom switch 60 side, and at the rising edge of the clock (on timing of the bottom MOSFET), the output pin connected to the data pin D is " L ", the current direction of the inductive load L1 is to the right in the figure, and the voltage level on the left side of the inductive load L1 becomes " L " to prevent the current in this direction from decreasing. In this case, the top switch side MOSFET becomes the main switch and the bottom switch side MOSFET becomes the flywheel switch. Therefore, the bottom switch ZCS/ZVS circuit 20B is unnecessary, so MOSFET M4 is turned off to shutoff the circuit elements. (If bottom switch ZCS/ZVS circuit 20B and top switch ZCS/ZVS circuit 2OT are connected simultaneously, unintended circuit operation will occur and losses will increase.) That is, for the same reason as the inverter circuit of the fourth embodiment, the inverter circuit of the fifth embodiment requires a current direction detection circuit 70.

Similarly, when the current direction of the inductive load L1 is in the left direction, the ZCS/ZVS circuit 20T of the top side switch is interrupted.

[main switch on operation]

As shown in Fig. 8, assume that inductive load L1 is on the power source side, bottom switch 60 acts as the main switch, and top switch 50 is in flywheel circuit operation. When the bottom switch side MOSFET is off, the current in the inductive load L1 is decreasing, so the load current is flowing while the inductive load L1 generates a + voltage on the left side to maintain the current.

Referring now to Figs. 9 and 12, the top-switch side MOSFET is turned off ahead of the top-switch side MOSFET by the dead time, but the aforementioned current direction and value are maintained. Since the bottom switch side MOSFET turns on after a delay, the top side recovery diode D5 and the body diode reverse recovery current of each MOSFET flow, the current in inductor L3 reverses rapidly and the current in inductor L4 increases with a predetermined rise time (time constant) since its initial value is 0. → This causes the drain current to increase after the drain voltage of the bottom switch-side MOSFET reaches 0 V, thus realizing ZCS operation during the main switch-on transition. In addition, the top switch recovery current (energy) is stored in the inductors L3 and L4 as a current and is regenerated to the power source in the next and subsequent operations, thus improving the power conversion efficiency.

Focusing on the behavior of inductor L3, as shown in Figs. 12 and 13, a large recovery current of the top switch flows through inductor L3 when the bottom switch-side MOSFET is turned on, but the current rapidly decreases as the recovery current disappears. Then, in order to maintain the previous current, inductor L3 generates a large voltage with the polarity of the top (node n012) becoming negative (Figs. 10 and 12). As a result, capacitor C2 and C1 are charged through diodes D1 (D1a, D1b) and D3 (D3a, D3b), respectively, with the left side of capacitor C2 positive and the top of capacitor C 1 positive, and the previous recovery energy is stored in both capacitors. As shown in Fig. 13, a large negative surge voltage of about 70 V is generated at node n012, but the capacitance settings of capacitors C1 and C2 are important to prevent this voltage from exceeding the withstand voltage of the top-side switch.

The ratio of capacitors C1 and C2 is set so that the lower end voltage of capacitor C1 is 0V after capacitors C1 and C2 are charged to achieve ZVS during the off operation of the bottom switch side MOSFET as described below.

When the power source voltage is 48V and the withstand voltage of the top-side switch is (48V + 70V ≈ 120V), the relational equation is as follows.

$$(48V+70V) \times C1/(C1+C2) = 48V$$

[Main switch off operation].

The capacitor C1 is charged to 48V, which is equal to the power source voltage, by the above-mentioned ON operation. Therefore, when the bottom switch side MOSFET, which is the main switch, is turned off, the drain current becomes 0A, but the drain voltage starts from 0V because it is equal to the voltage at the bottom end of capacitor C1 as the voltage at the left end of inductive load L1 rises due to the decrease in current of inductive load L1, and regenerative current flows to the power source side. The capacitor C1 discharges while the regenerative current flows to the power source side. Since the top switch is in the dead time period during this operation, the capacitor C1 current does not flow back through the top switch MOSFET, inductor L3, inductor L4, and diodes D1 (D1a, D1b), thus preventing power loss. When the capacitor C1 is completely discharged, the flywheel current of the inductive load L1 above is returned to the power source through diodes D1 (D1a, D1b), D3 (D3a, D3b), and D2 (D2a, D2b) for a short time, but the voltage at node n012 reaches the source potential of the MOSFET on the top switch side, and the power loss of the above diodes D1 (D1a, D1b), D3 (D3a, D3b), and D2 (D2a, D2b) is kept small since it is returned to the power source through the top switch after this.

As shown in Fig. 14, the off operation of the main switch as described above realizes ZVS operation, in which the voltage rises after the current reaches zero, thereby suppressing switching losses. The current rise of the capacitor C2 in Fig. 14, C2up, indicates the current regenerated on the power source side.

The losses and power conversion efficiencies resulting from each of the above switching operations are as follows.

    Bottom switch side MOSFET loss (for one MOSFET) 3.9488 W
    Bottom side recovery reduction Schottky diode D5 loss = 15.25u W
    Top switch side MOSFET loss (for one MOSFET) 3.7975 W
    Top side recovery reduced Schottky diode D7 loss = 262.54 mW
    Load power = 3.6925 KW
    Power source power = 3.7231 KW
    Efficiency = 99.178

As a result, the power loss can be reduced by 63.72% as a fast hard switching circuit of conventional technology.

(Other reference values)

    ZCS/ZVS Circuit Component Loss
    M4=4 54.2mW
    D2a=6 99.92mW
    D2b=6 99.92mW
    D3a=7 90.63mW
    D3b=7 90.63mW
    D1a=6 89.04mW
    D1b=6 89.04mW
    L3=1 .3214W
    L4=1 .3376W

[Noise analysis of output voltage/input current).

Fig. 15 shows the FFT analysis results of the output voltage waveform.
It can be seen that the inverter circuit of the fifth embodiment is significantly lower than the noise peak envelope of the conventional technology.
Fig, 16 shows the FFT analysis result of the power source current waveform.
It can be seen that the inverter circuit of the fifth embodiment is much lower than the envelope of the noise peak of the conventional technology.

[Comparison of the rising/falling waveforms and supply current waveforms in the inverter circuit of conventional technology and the ZCS/ZVS of the fifth embodiment shown in Fig. 27]

Fig. 17 and 18 show the cause of the noise difference generated by the conventional technology inverter circuit and the ZCS/ZVS of the fifth embodiment from their switching waveforms.
Fig. 17 shows the falling waveforms, with the upper side representing the falling edge of the output voltage and the lower side representing the falling edge of the supply current. In the falling edge of the output voltage on the upper side, the conventional technology inverter circuit has a steeply falling waveform, while the ZCS/ZVS of the fifth embodiment has a gradual falling edge. At the falling edge of the lower power source current, the inverter circuit of the conventional technology generates a spark-like recovery current that changes in a short period of time. This recovery current is a power loss and a source of significant noise.
Fig. 18 shows the rising waveforms, with the upper side representing the rising output voltage and the lower side representing the rising supply current. In the rising edge of the output voltage on the upper side, the conventional technology inverter circuit has a steeply rising waveform, while the ZCS/ZVS of the fifth form has a gently rising waveform. In the falling edge of the lower power source current, the inverter circuit of the conventional technology has a steeply rising waveform, while the ZCS/ZVS of the fifth embodiment has a gently rising waveform.

In the inverter circuit of the fifth embodiment, as described above, the switch recovery current (energy) that flows to the MOSFET on the opposite side of the flywheel switch during the main switch-on transition becomes current and is stored in inductors L3 and L4, and is regenerated to the power source during the next switch-off operation. This improves the power conversion efficiency. In addition, by storing the switch recovery current in inductors L3 and L4, it can be suppressed and low noise can be realized.

In the inverter circuit of the fifth embodiment, the energy of the inductor L1 used to turn on the MOSFETs of the top switch 50 and the bottom switch 60 with ZCS is stored in the capacitor C 1 while the MOSFETs of the top switch 50 and the bottom switch 60 are on. The energy (voltage) of capacitor C1 is then used to turn off the MOSFETs of the top switch 50 and the bottom switch 60 with ZVS, and the energy of capacitor C1 is returned to the power source side while the MOSFETs of the top switch 50 and the bottom switch 60 are off, completely discharging the capacitor C1. In the conventional inverter circuit of ZCS and ZVS, the energy used for ZCS and ZVS operation is consumed as it is, whereas in the inverter circuit of the fifth embodiment, the energy used for ZCS and ZVS operation is returned to the power source side, resulting in high efficiency.

In the embodiment described above, a MOSFET is exemplified as the switching device, but various switching devices for power electronics such as SiC can be used as the switching device. Also, each diode can be a known ideal diode device consisting of a MOSFET.

Fig. 19 is a circuit diagram showing the regenerative operation of the inverter circuit of the fifth embodiment.

The three-phase inverter for automotive use regenerates power from the motor side to charge the storage battery. Deceleration regenerative operation is required. In the ZCS and ZVS type inverter circuits of conventional technology, when regenerative operation is performed, the switches in the ZCS and ZVS cannot be turned on and off properly, resulting in a significant decrease in the regenerative efficiency. In contrast, the inverter circuit of the fifth embodiment can perform ZCS when the MOSFET is on and ZVS when it is off, so the efficiency does not drop even in regenerative operation.

Fig. 20 is a schematic diagram of a half-bridge power module 210 composed by the inverter circuit of the fifth embodiment. The power module 210 has a - side input terminal 112, a + side input terminal 114, and an output terminal 124. The - side input terminal 112 has a peripheral circuit 120 and a bottom inverter switch 122, such as a SiC or MOSFET. The + side input terminal 112 has a peripheral circuit 116 and a top inverter switch 118 attached to it. The output terminal 124 and the bottom inverter switch 122 are connected via the bottom side inductor L4, which is integrally formed with the output terminal. The output terminal 124 and the top inverter switch 118 are connected via the top side inductor L3 formed as an integral part of the output terminal. The above components are molded in a state in which they are arranged on a substrate 130, and constitute a power module 210.

The top side inductor L3 connected to the top inverter switch 118 and the bottom side inductor L4 connected to the bottom inverter switch 122 are part of a metal plate constituting the output terminal 124 and contain a pair of extending pieces 124A and 124B formed so that their extending directions are orthogonal. The top side inductor L3 constitutes inductor L3 in Fig. 17, and the bottom side inductor L4 constitutes inductor L4. Although magnetic flux is generated in both extending pieces 124A and 124B in a spiral shape with respect to the direction of extension, the magnetic fluxes do not interfere with each other because the directions of extension are formed in an orthogonal manner. The extending pieces 124A and 124B are of constant width and extend from the ends 124R and 124L of the metal plate containing the output terminal 124. The length Ln of the extending pieces 124A and 124B is 7.5 mm and has an inductance of 5 nH.

The top side inductors L3 and bottom side inductors L4 of the power module 210 of the fifth embodiment are part of the metal plate that constitutes the output terminal 124, so they can be configured inexpensively, have high mechanical strength, and are highly reliable.

[First Modification of the Fifth Embodiment].

Fig. 21 is a circuit diagram of an inverter circuit for the first modified example of the fifth embodiment.

The inverter circuit for the first modified example of the fifth embodiment is for driving a 3-phase motor with a U-phase coil LU, a V-phase coil, and a W-phase coil not shown, as in the fifth embodiment.

[Circuit configuration]

The U-layer inverter circuit 110U of the switching circuit for the first modification of the fifth embodiment contains a half-bridge inverter having a top inverter switch 50 and a bottom inverter switch 60, a top-side auxiliary circuit 20T that performs ZVS/ZCS operation with a signal from control circuit means 10 when the top inverter switch 50 is turned on or off, and a bottom side auxiliary circuit 20B that performs ZVS/ZCS operation with a signal from control circuit means 10 when bottom inverter switch 60 is turned on or off.

[Current Direction Detection Circuit]

The current direction detection circuit 70 in Fig. 21 detects the current direction. The current direction detection circuit 70 determines whether the load current is in the outgoing direction or the ingoing direction to the inverter circuit according to the level of the output terminal at the timing when the bottom switch 60 is turned on. Specifically, the clock terminal CLK of flip-flop A4 is the input signal of the gate driver of the MOSFET on the bottom switch 60 side, and at the rising edge of the clock (on timing of the bottom MOSFET), the output terminal connected to the data terminal D is " L ", the current direction of the inductive load LU is to the right in the figure, and the voltage level on the left side of the inductive load LU becomes " L " to prevent the inductive load LU from decreasing the current in this direction. In this case, the top switch side MOSFET becomes the main switch and the bottom switch side MOSFET (60) becomes the flywheel switch. Therefore, the bottom switch ZCS/ZVS circuit 20B is unnecessary, so switch SW1 is turned off to shut off the circuit elements. (If bottom switch ZCS/ZVS circuit 20B and top switch ZCS/ZVS circuit 2OT are connected simultaneously, unintended circuit operation will occur and losses will increase.)

Similarly, when the current direction of the inductive load LU is to the left, the top switch ZCS/ZVS circuit 20T is blocked by switch SW2.

[Second Modification of the Fifth Embodiment]

Fig. 22 shows the circuit diagram of the inverter circuit for the second modification of the fifth embodiment.

The inverter circuit for the second modification of the fifth embodiment is for driving a 3-phase motor with a U-phase coil LU, a V-phase coil, and a W-phase coil not shown, as in the fifth embodiment.

[Circuit Configuration]

The U-layer inverter circuit 110U of the inverter circuit for the second modification of the fifth embodiment contains a half-bridge inverter having a top inverter switch 50 and a bottom inverter switch 60, a top-side auxiliary circuit 20T that performs ZVS/ZCS operation with a signal from control circuit means 10 when the top inverter switch 50 is turned on or off, and a bottom side auxiliary circuit 20B that performs ZVS/ZCS operation with a signal from control circuit means 10 when bottom inverter switch 60 is turned on or off.

[Current Direction Detection Means]

The current direction detection circuit 70 in Fig. 22 detects the current direction. The current direction detection circuit 70 contains a resistor R22 is connected between the top side inductor L3 and the bottom side inductor L4 at the connection CN and the load LU, a first comparator CPT connected to both ends of the resistor R22, which generates an output when the potential of the load LU side is lower than the potential of the connection CN side, i.e., the load current flows out to the load LU side and the potential of the load LU side is lower than the potential of the connection CN side due to voltage drop in the resistor R22, and a second comparator CPB, which generates an output when the potential of the load LU side is higher than the potential of the connection CN side, i.e., the load current flows into the inverter side, and the potential of the load LU side is higher than the potential of the connection CN side due to the voltage drop across the resistor R22. The output of the first comparator CPT (H = on) turns on the switch SW2, enabling the top-side auxiliary circuit 20T to operate, and the off of the second comparator CPB turns off the switch SW1, disabling the bottom-side auxiliary circuit 20B.

The output of the second comparator CPB (H = on) turns on switch SW1, enabling operation of the bottom-side auxiliary circuit 20B, and the off of the first comparator CPT turns off switch SW2, disabling operation of the top-side auxiliary circuit 20T. The inverter circuit 110 for the second modified example of the fifth embodiment detects the main switch by determining whether the current load is flowing out or in from the inverter circuit, enabling operation of the top-side auxiliary circuit 20T or bottom-side auxiliary circuit 20B on the main switch side, and disabling the top-side auxiliary circuit 20T or 20B on the non-main switch side can be disabled. The inverter circuit for the second modified example of the fifth embodiment has a simple configuration because the detection means 70 consists of a resistor R22, a first comparator CPT, and a second comparator CPB.

[Sixth embodiment].

Fig. 23 shows the circuit diagram of the inverter circuit of the sixth embodiment.

The inverter circuit of the sixth embodiment is for driving a 3-phase motor with a U-phase coil LU, a V-phase coil not shown, and a W-phase coil, as in the fifth embodiment.

[Circuit Configuration]

The U-layer inverter circuit 110U of the switching circuit for the sixth embodiment contains a half-bridge inverter having a top inverter switch 50 and a bottom inverter switch 60, a top-side auxiliary circuit 20T that performs ZVS/ZCS operation with a signal from control circuit means 10 when the top inverter switch 50 is turned on or off, and a bottom side auxiliary circuit 20B that performs ZVS/ZCS operation with a signal from control circuit means 10 when bottom inverter switch 60 is turned on or off.

[Control circuit means]

The control circuit means 10 is equipped with a saw wave oscillator 12 that generates saw waves with a fixed carrier frequency of 10 KHz to 100 KHz. Phase U, V, and W control signals with different phases of 120° are input to the control circuit means 10, and the U-phase control signal (U-phase control input signal) is compared with the saw wave in the comparator CPU for U-phase output, and a square wave with on and off duty modulated in accordance with the sine wave of the U-phase control signal is The comparator CPU for U-phase output outputs a square wave with on and off duty modulated in accordance with the sine wave of the U-phase control signal. The square wave from the comparator CPU for U-phase output turns on/off the bottom inverter switch 60 via delay means 14B and turns on/off the top inverter switch 50 via knot circuit NT1 and delay means 14T. Delay means 14B and delay means 14T provide a dead time between top inverter switch 50 and bottom inverter switch 60 to prevent top inverter switch 50 and bottom inverter switch 60 from being turned on simultaneously. Comparator CPV for V-phase output and comparator CPW for W-phase output operate in the same way as the comparator CPU for U-phase output above. When increasing the motor torque, the sinusoidal amplitude of the U, V, and W phase control signals is increased, and when increasing the motor rotation, the frequency of the U, V, and W phase control signals is increased. The sinusoidal frequency of the U, V, and W phase control signals is about 50 Hz to 100 Hz at the motor's rotation speed.

[Comparison means]

Comparison means 80 in Fig. 23 detects the current direction.

Comparison means 80 contains comparator CPU2 for U-phase control, which compares the W-phase control input signal with the U-phase control input signal, comparator CPV2 for V-phase control, which compares the U-phase control input signal with the V-phase control input signal, and comparator CPW2 for W-phase control, which compares the V-phase control input signal with the W-phase control input signal.

Fig. 24 shows the phase U, V, and W output currents and the phase U, V, and W control signals. The phase U, V, and W output currents are 180° behind the phase U, V, and W control signals. The positive amplitude of the sine wave of the phase U, V, and W output currents represents the output current flowing in the phase U coil LU in the right direction (load current is flowing out to the load LU), and the amplitude of the minus side of the sine wave represents the output current flowing into the U-phase coil LU to the left (the load current is flowing into the inverter side). The comparator CPU2 for U-phase control compares the W-phase control input signal and the U-phase control input signal, and the timing between the chain line in the figure, the W-phase control input signal (two points chain line), while the amplitude of the U-phase output current is larger than the U-phase control input signal (solid line), the amplitude of the U-phase output current is on the positive side. While the U-phase output current amplitude is on the positive side, an ON signal is output from comparator CPU2 for U-phase control, and the switch SW2U of the top-side auxiliary circuit 20T on the main switch side of 110U of U-phase is turned on, an inverted off signal of the on signal via the knot circuit NT2 turns off the switch SW 1U of the bottom-side auxiliary circuit 20B. On the other hand, while the amplitude of the U-phase output current is on the negative side, the output is turned off from comparator CPU2 for U-phase control, switch SW2U of the top-side auxiliary circuit 20T on the main switch side of U-phase 110U is turned off, and the inverted on signal of the off signal via the knot circuit NT2 turns on switch SW1U of the bottom-side auxiliary circuit 20B.

Fig. 25 shows the U, V, and W phase output currents and the U, V, and W phase control signals. the comparator CPU2 for V phase control compares the U phase control input signal and the V phase control input signal, and while the U phase control input signal (solid line) is greater than the V phase control input signal (single point chain line) at the timing between the chain lines in the figure, the amplitude of the V phase output current is on the positive side. While the amplitude of the V-phase output current is on the positive side, an on signal is output from comparator CPV2 for V-phase control, switch SW2V of the top-side auxiliary circuit 20T on the main switch side of Vphase 110V is turned on, and the inverted off signal of the on signal through the knot circuit NT4 turns off the switch SW1V of the bottom side auxiliary circuit 20B.

Fig. 26 shows the U, V, and W phase output currents and the U, V, and W phase control signals. The comparator CPW2 for W phase control compares the V phase control input signal with the W phase control input signal, and while the V phase control input signal (single point chain line) is greater than the W phase control input signal (double point chain line) at the timing between the chain lines in the figure, the W phase output current is on the positive side. While the amplitude of the W-phase output current is on the positive side, an on signal is output from comparator CPW2 for W-phase control, switch SW2W of top-side auxiliary circuit 20T on the main switch side of W-phase 110W is turned on, and the inverted off signal of the on signal through the knot circuit NT6 turns off the switch SW1V of the bottom side auxiliary circuit 20B.

In the inverter circuit 110 of the sixth embodiment, the auxiliary circuit shutoff means contains auxiliary circuit interrupting means (switch) SW1U for U-phase that enables the top side auxiliary circuit 20T or bottom side auxiliary circuit 20B on the main switch side of U-phase 110U to operate and disables the top side auxiliary circuit or bottom side auxiliary circuit on the non-main switch side based on the output of comparator CPU2 for U-phase control, SW2U, auxiliary circuit shutoff means SW1V and SW2V for V-phase, which enable operation of the top-side auxiliary circuit 20T or bottom-side auxiliary circuit 20B on the main switch side of V-phase 110V and disable operation of the top-side auxiliary circuit or bottom-side auxiliary circuit on the non-main switch side based on the output of comparator CP2 for V-phase control, and auxiliary circuit shutoff means SW1W and SW2W for W-phase that enable operation of the top side auxiliary circuit 20T or the bottom side auxiliary circuit 20B on the main switch side of W-phase 110W and disable operation of the top side auxiliary circuit or the bottom side auxiliary circuit on the non-main switch side based on the output of comparator CPW2 for controlling W-phase. The inverter circuit of the sixth embodiment detects the main switch from the U-phase control input signal, the V-phase control input signal, and the W-phase control input signal to enable the top-side auxiliary circuit 2OT or the bottom-side auxiliary circuit 20B on the main switch side to operate and disable the top-side auxiliary circuit 20T or the bottom-side auxiliary circuit 20B on the non-main switch side to the top-side auxiliary circuit 20T or the bottom-side auxiliary circuit 20B on the non-main switch side can be disabled. The inverter circuit of the sixth embodiment can shutoff the auxiliary circuit without passing load current through a resistor, so there is no resistance loss and high efficiency.

In the above embodiment, switches SW1, SW2, SW1U, SW2U, etc. contain semiconductor switching elements.

DESCRIPTION OF NUMERICAL REFERENCES

10 Control circuit means
20T Top-side auxiliary circuit
20B Bottom side auxiliary circuit
50 Top inverter switch
60 Bottom inverter switch
C1 First Capacitor
C2 Second Capacitor
D1 First rectification method
D2 Second Rectification Means
D3 Third rectification method
L Inductor
L1 Load Means
L3 Top-side inductor
L4 Bottom side inductor

**Claims**

1. A switching circuit that drives a load means by interrupting an electric power supplied from a power source, and that reduces switching losses by setting a time difference between a voltage applied to a switching means built into the switching circuit and the current flowing through the switching means, which is a soft switching method, comprising:

   an inductor located between the load means and the switching means;
   a first rectifier means and a first capacitor arranged in series between the switching means and the power source or ground;
   a second rectifier means and a second capacitor connected in parallel through the inductor to the first rectifier means and the first capacitor arranged in series; and
   a third rectifier means arranged between a connection of the first rectifier means and the first capacitor and a connection of the second capacitor and the second rectifier means.

2. The switching circuit according to Claim 1, wherein

   the first rectifier means prevents a charge of the first capacitor from short-circuiting to the switching means;
   the third rectifier means prevents a short circuit in the inductor.

3. The switching circuit according to Claim 2, wherein the second rectifier means returns a charge of the second capacitor to the power source.

4. The switching circuit according to any one of Claims 1 to 3, wherein

   the load means is a resistive load; and
   the switching means consists of a switching element that is driven in one-sided switching mode only.

5. The switching circuit according to any one of Claims 1 to 3, wherein,

   the load means is an inductive load; and
   the switching circuit further comprises a rectifier element for conducting a flywheel current.

6. The switching circuit according to Claim 5, wherein

   the inductor is divided into two parts, one end of the inductive load being connected to a divided connection point, and an other end of the inductive load being connected to a power source or ground;
   one end of the rectifier element is connected in series to the inductor divided into two parts, and an other end of the rectifier element is connected to the power source or ground.

7. The switching circuit according to any one of Claims 1 to 3, wherein

   the load means is an inductive load; and
   the switching circuit further comprises a switching device for conducting a flywheel current.

8. The switching circuit according to Claim 7, wherein

the inductor is divided into two parts, one end of the inductive load is connected to a divided connection point, and an other end of the inductive load is connected to a power source or ground; one end of the rectifier element is connected in series to the inductor divided into two parts, and an other end of the rectifier element is connected to the power source or ground.

9. An inverter circuit, comprising:

a half-bridge inverter having a top inverter switch and a bottom inverter switch;
a top side auxiliary circuit performing a ZVS/ZCS operation when a top inverter switch is turned on or off; and
a bottom side auxiliary circuit performing the ZVS/ZCS operation when the bottom inverter switch is turned on or off,
the inverter circuit further comprising a top side inductor connected between the top inverter switch and a load means, which performs a ZCS operation during an on transition of the top inverter switch and the bottom inverter switch, and a bottom side inductor connected between the bottom inverter switch and the load means and connected to the top side inductor, wherein the top side auxiliary circuit comprising:

a first rectifier means and a first capacitor arranged in series between the top inverter switch and a power source or ground;
a second rectifier means and a second capacitor connected in parallel through the top side inductor to the first rectifier means and the first capacitor arranged in series; and
a third rectifier means arranged between a connection of the first rectifier means and the first capacitor and a connection of the second capacitor and the second rectifier means.

10. The inverter circuit according to Claim 9, wherein the inverter circuit is a 3-phase inverter.

11. The inverter circuit according to Claim 9 or Claim 10, wherein
the bottom side auxiliary circuit comprising:

a first rectifier means and a first capacitor arranged in series between the bottom inverter switch and the power source or ground;
a second rectifier means and a second capacitor connected in parallel through the bottom side inductor to the first rectifier means and the first capacitor arranged in series; and
a third rectifier means arranged between a connection of the first rectifier means and the first capacitor and a connection of the second capacitor and the second rectifier means.

12. The inverter circuit according to any one of claims 9 to 11, further comprising:

a detection means for detecting which of the top inverter switch or the bottom inverter switch is a main switch; and
an auxiliary circuit shutoff means for enabling the operation of the top side auxiliary circuit or the bottom side auxiliary circuit on a main switch side and disabling the operation of the top side auxiliary circuit or the bottom side auxiliary circuit on a non-main switch side.

13. The inverter circuit according to Claim 12, further comprising:

a flip-flop having an input terminal constituting the detection means and an output terminal controlling the auxiliary circuit shutoff means.

14. The inverter circuit according to Claim 12, wherein the detecting means comprises:

a resistor connected between a connection of the top side inductor and the bottom side inductor connection and a load;
a pair of comparators connected to both ends of the resistor and comparing a potential of a load side of the resistor with a potential of a connection side of the resistor, comprising a first comparator that generates an output when the potential of the load side is lower than the potential of the connection side, and a second comparator that generates an output when the potential of the load side is higher than the potential of the connection side; wherein the auxiliary circuit shutoff means comprises a first switch and a second switch that enables the operation of the top side auxiliary circuit or the bottom side auxiliary circuit on the main switch side and disables the operation of the top side auxiliary circuit or the bottom side auxiliary circuit on the non-main switch side according to the outputs of the first comparator and the second comparator.

15. The inverter circuit according to Claim 10, further comprising:

a comparison means for comparing U-phase control input signal, V-phase control input signal, and W-phase control input signal; and
an auxiliary circuit shutoff means which, based on comparison results of the comparison means, enables the operation of the top side auxiliary circuit or the bottom side auxiliary circuit on a main switch side and disables the operation of the top side auxiliary circuit or the bottom side auxiliary circuit on a non-main switch side.

16. The inverter circuit according to Claim 15, wherein the comparison means comprising:

a comparator for U-phase control comparing the W-phase control input signal with the U-phase control input signal;
a comparator for V-phase control comparing the U-phase control input signal and the V-phase control input signal; and
a comparator for W-phase control comparing the V-phase control input signal with the W-phase control input signal;
the auxiliary circuit shutoff means comprises:

an auxiliary circuit shutoff means for phase U, which enables the operation of the top side auxiliary circuit or the bottom side auxiliary circuit on the main switch side of phase U and disables the operation of the top side auxiliary circuit or the bottom side auxiliary circuit on the non-main switch side, based on an output of the comparator for U-phase control;
an auxiliary circuit shutoff means for phase V, which enables the operation of the top side auxiliary circuit or the bottom side auxiliary circuit on the main switch side of phase V and disables the operation of the top side auxiliary circuit or the bottom side auxiliary circuit on the non-main switch side, based on an output of the comparator for V-phase control; and
an auxiliary circuit shutoff means of phase W, which enables the operation of the top side auxiliary circuit or the bottom side auxiliary circuit on the main switch side of phase W and disables the operation of the top side auxiliary circuit or the bottom side auxiliary circuit on the non-main switch side, based on an output of the comparator for W-phase control.

17. A power module comprising the inverter circuit of claim 9 as an integral part.

18. The power module according to Claim 17, wherein the top side inductor connected to the top inverter switch and the bottom side inductor connected to the bottom inverter switch are a part of a metal plate comprising an output terminal and comprising a pair of extending pieces formed so that their extending directions are orthogonal.

19. The power module according to Claim 18, wherein the extending pieces have a constant width and extend from both ends of the metal plate comprising the output terminal.

20. An inverter circuit, comprising:

a half-bridge inverter having a top inverter switch and a bottom inverter switch;
a top side inductor connected to the top inverter switch; and
a bottom side inductor connected to the bottom inverter switch,
wherein
the top side inductor connected to the top inverter switch and the bottom side inductor connected to the bottom inverter switch are a part of a metal plate comprising an output terminal and comprising a pair of extending pieces formed so that their extending directions are orthogonal.

21. The inverter circuit according to Claim 20, wherein the extending pieces have a constant width and extend from both ends of the metal plate comprising the output terminal.

# Fig.1

(A)

(B)

# Fig.2

(A)

(B)

# Fig.3

# Fig.4

(A)

(B)

Fig.5

# Fig.6

Fig.7

EP 4 443 733 A1

Fig.8

Fig.9

Fig.10

EP 4 443 733 A1

Fig.11

Fig.12

# Fig.13

Fig.14

Fig.15

# Fig.16

EP 4 443 733 A1

## Fig.17

[V]

ZCS/ZVS
Output Voltage Falling [V]

Conventional technology
Output Voltage Falling [V]

Time[μs]

[kA]

ZCS/ZVS
Supply current [kA]

Conventional technology
Supply current [kA]

Time[μs]

EP 4 443 733 A1

# Fig.18

Fig.19

# Fig.20

# Fig.21

# Fig.22

Fig.23

EP 4 443 733 A1

# Fig.24

# Fig.25

# Fig.26

Fig.27

Fig.28

Fig.29

## INTERNATIONAL SEARCH REPORT

International application No.

**PCT/JP2022/043346**

### A. CLASSIFICATION OF SUBJECT MATTER

*H02M 7/48*(2007.01)i
FI: H02M7/48 E

According to International Patent Classification (IPC) or to both national classification and IPC

### B. FIELDS SEARCHED

Minimum documentation searched (classification system followed by classification symbols)

H02M7/48

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 4-299074 A (MITSUBISHI ELECTRIC CORP.) 22 October 1992 (1992-10-22) entire text, all drawings | 1-21 |
| A | US 5828559 A (CHEN, Keming) 27 October 1998 (1998-10-27) entire text, all drawings | 1-21 |
| A | CD-ROM of the specification and drawings annexed to the request of Japanese Utility Model Application No. 70539/1992 (Laid-open No. 34336/1994) (MEIDENSHA CORP.) 06 May 1994 (1994-05-06), entire text, all drawings | 1-21 |

☐ Further documents are listed in the continuation of Box C.　　☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **26 January 2023** | **07 February 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/043346**

| Patent document cited in search report | | | Publication date (day/month/year) | Patent family member(s) | | | Publication date (day/month/year) |
|---|---|---|---|---|---|---|---|
| JP | 4-299074 | A | 22 October 1992 | US entire text, all drawings DE | 5260607 4210092 | A A1 | |
| US | 5828559 | A | 27 October 1998 | (Family: none) | | | |
| JP | 6-34336 | U1 | 06 May 1994 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014220913 A

- JP 2015076989 A